# EUROPEAN PATENT SPECIFICATION

(11) **EP 4 529 106 B1**
(45) Date of publication and mention of the grant of the patent: **30.09.2026**
(21) Application number: 23893306.3
(22) Date of filing: 23.08.2023
(51) Int. Cl.: H04L 27/00, H04B 1/401, H04B 1/00, H04B 1/40

(54) **RADIO FREQUENCY MODULE**
RADIOFREQUENZMODUL
MODULE RADIOFRÉQUENCE

(30) Priority: 21.11.2022 CN 202211462670
(43) Date of publication of application: 26.03.2025
(73) Proprietor: Honor Device Co., Ltd., Shenzhen, Guangdong 518040 (CN)
(72) Inventor: PENG, Biao, Shenzhen, Guangdong 518040 (CN); HUANG, Qinghua, Shenzhen, Guangdong 518040 (CN)
(74) Representative: Beder, Jens
(86) International application number: PCT/CN2023/114415
(87) International publication number: WO 2024/109212

(56) References cited:
- WO-A1-2022/062585
- WO-A1-2022/062663
- CN-A- 107 302 373
- CN-A- 107 332 573
- CN-A- 115 001 525
- CN-A- 115 065 379
- US-A1- 2006 141 944
- US-A1- 2022 149 887
- US-A1- 2022 190 870

## Description

This application claims priority to Chinese Patent Application CN 118 057 740 A (Application No. 202211462670.6), filed with the China National Intellectual Property Administration on November 21, 2022 and entitled "RADIO FREQUENCY MODULE".

### TECHNICAL FIELD

This application relates to the field of radio frequency circuit technologies, and in particular, to a radio frequency chip including a radio frequency module, an electronic device and a radio frequency module control method.

### BACKGROUND

A radio frequency module and an antenna may be disposed in an electronic device to provide a wireless communication function.

In different situations, a design of the antenna may include a single-antenna design and a dual-antenna design. Corresponding to different antenna designs, different radio frequency modules need to be selected for solution adaptation.

If the radio frequency module is not selected properly, adaptation of the radio frequency module and the antenna is difficult, affecting wireless communication quality.

US 2006/141944 A1 discloses an antenna sharing device which separates and combines signals transmitted and received in first to third signal bands and which thereby enables an antenna terminal to be shared as a common terminal. It includes a diplexer realizing an attenuation characteristic for protection against ESD, a compound semiconductor switch with an IIP3 of 66 dBm or more, and an inexpensive PIN diode switch.

### SUMMARY

Embodiments of this application provide a radio frequency chip, an electronic device and a radio frequency module control method. A compatible port is provided in a radio frequency module of the radio frequency chip, so that the radio frequency module can support radio frequency domain processing of different antenna solutions.

The invention is defined in the independent claims. Additional features of the invention are provided in the dependent claims. In the following, parts of the description and drawings referring to embodiments, which are not covered by the claims, are not presented as embodiments of the invention but as examples useful for understanding the invention.

According to a first aspect, a radio frequency module is provided. The radio frequency module is used in an electronic device. At least one antenna is also disposed in the electronic device. The radio frequency module includes a radio frequency link set and at least two switch assemblies. The radio frequency link set includes at least two radio frequency links for performing radio frequency processing of a signal. Each radio frequency link in the radio frequency link set is electrically connected to an input end of the at least two switch assemblies, and one radio frequency link corresponds to one input end of the switch assembly. An output end is provided on a first switch assembly. A first output end of the first switch assembly is configured to be electrically connected to an antenna of the electronic device. The first switch assembly is included in the at least two switch assemblies. The first antenna is included in the at least one antenna. A compatible port is also provided on the first switch assembly. The compatible port is configured to transmit a signal between the output end of the first switch assembly and an output end of a second switch assembly. The second switch assembly is included in the at least two switch assemblies.

In this way, the radio frequency module can be compatible with both a single-antenna design and a dual-antenna design through the provision of the compatible port. For example, in the dual-antenna design, output ends respectively corresponding to the at least two switch assemblies may be connected to two antennas, respectively, so that signals on the antennas can flow through the switch assemblies to a front-end radio frequency link for radio frequency domain processing. For another example, in the single-antenna design, the antenna may be connected to a switch assembly provided with a compatible port. In this way, when the antenna operates in an operating band of a radio frequency link connected to a current switch assembly, the signal can be directly introduced into the radio frequency link through the switch assembly. When the operating band of the antenna is different from the radio frequency link connected to the switch assembly, the signal may flow to another switch assembly through the compatible port, to flow to a corresponding radio frequency link by the another switch assembly for radio frequency processing. Therefore, for different antenna solutions, a requirement of the radio frequency domain processing can be met without replacing the radio frequency module.

Optionally, the radio frequency link set includes a first radio frequency link set and a second radio frequency link set. The first switch assembly corresponds to the first radio frequency link set, and the second switch assembly corresponds to the second radio frequency link set. That each radio frequency link in the radio frequency link set is electrically connected to an input end of the at least two switch assemblies includes: Each radio frequency link in the first radio frequency link set is electrically connected to an input end of the first switch assembly. Each radio frequency link in the second radio frequency link set is electrically connected to an input end of the second switch assembly.

Optionally, the first radio frequency link set is configured to perform radio frequency domain processing on signals with different frequencies in a first band. The second radio frequency link set is configured to perform radio frequency domain processing on signals with different frequencies in a second band.

Optionally, the first band is a low band. The first radio frequency link set includes a low frequency radio frequency link.

Optionally, the second band is a medium-high band. The second radio frequency link set includes a medium-high band radio frequency link.

According to the foregoing solution, connection relationships between different switch assemblies and radio frequency links are determined.

Optionally, the at least one antenna of the electronic device includes a first antenna. An operating frequency of the first antenna covers the first band and the second band. The first antenna is electrically connected to the output end of the first switch assembly. When the electronic device operates in the first band, the output end of the first switch assembly is electrically connected to at least one input end of the first switch assembly. When the electronic device operates in the second band, the output end of the first switch assembly is electrically connected to the compatible port, the compatible port is electrically connected to the output end of the second switch assembly, and the output end of the second switch assembly is electrically connected to at least one input end of the second switch assembly.

In this example, a limitation on an operating mechanism of the radio frequency module in a single-antenna solution is provided. To be specific, flow between radio frequency links respectively corresponding to different bands can be implemented through the compatible port.

Optionally, that the compatible port is electrically connected to the output end of the second switch assembly includes: The compatible port is electrically connected to the output end of the second switch assembly through a transmission line on a PCB. Alternatively, the compatible port is electrically connected to the output end of the second switch assembly through a transmission line inside the radio frequency module.

Optionally, the at least one antenna of the electronic device includes a second antenna. An operating frequency of the second antenna covers the first band. The second antenna is electrically connected to the output end of the first switch assembly. When the electronic device operates in the first band, the output end of the first switch assembly is electrically connected to at least one input end of the first switch assembly. For example, the second antenna may correspond to an antenna covering a partial band. For example, the second antenna may be configured to cover the low band.

Optionally, the at least one antenna of the electronic device includes a third antenna. An operating frequency of the third antenna covers the second band. The third antenna is electrically connected to the output end of the second switch assembly. When the electronic device operates in the second band, the output end of the second switch assembly is electrically connected to at least one input end of the second switch assembly. For example, the third antenna may correspond to an antenna covering a partial band. For example, the third antenna may be configured to cover the medium-high band.

According to a second aspect, a radio frequency module control method is provided. The method is applied to an electronic device. The radio frequency module provided in any one of the first aspect and the possible designs of the first aspect is disposed in the electronic device. A processor and a first antenna are also disposed in the electronic device. A coverage band of the first antenna includes a band corresponding to the radio frequency link set. The first antenna is connected to an output end of a first switch assembly of the radio frequency module. The method includes: When the electronic device operates in a first band, the processor controls the output end of the first switch assembly to electrically connect to at least one input end of the first switch assembly. When the electronic device operates in a second band, the processor controls the output end of the first switch assembly to electrically connect to a compatible port on the first switch assembly, to enable a signal to flow between the output end of the first switch assembly and an output end of a second switch assembly through the compatible port. The first band and the second band are both included in the coverage band of the first antenna, the first band corresponds to a first radio frequency link set corresponding to the first switch assembly, and the second band corresponds to a second radio frequency link set corresponding to the second switch assembly.

According to the solution, the electronic device can control an operating state of the switch assembly in the radio frequency module, and use the compatible port to implement flow of the signal between the antenna and the radio frequency link in a single-antenna solution.

According to a third aspect, a radio frequency chip is provided. The radio frequency chip includes the radio frequency module provided in any one of the first aspect and the possible designs of the first aspect. The radio frequency chip includes a first pin, a second pin, and a third pin. The first pin corresponds to an output end of a first switch assembly of the radio frequency module, the second pin corresponds to an output end of a second switch assembly of the radio frequency module, and the third pin corresponds to a compatible port of the radio frequency module. In this example, an implementation of a specific radio frequency module is provided. For example, various components in the radio frequency module provided in the first aspect may be integrated into the radio frequency chip. The radio frequency chip may provide an interaction interface between the radio frequency module and an external component through a pin. For example, a pin corresponding to an output end of each switching component and a pin corresponding to the compatible port may be disposed in the radio frequency chip.

Optionally, the third pin is located between the first pin and the second pin. Because the compatible port is configured to be electrically connected to output ends of different switch assemblies, the compatible port may be provided between different switch assemblies to reduce a loss caused by a signal flowing through the compatible port.

According to a fourth aspect, a radio frequency chip is provided. The radio frequency chip includes the radio frequency module provided in any one of the first aspect and the possible designs of the first aspect. The radio frequency chip includes a first pin and a second pin. The first pin corresponds to an output end of a first switch assembly of the radio frequency module, and the second pin corresponds to an output end of a second switch assembly of the radio frequency module. A compatible port electrically connected to the second pin is also provided in the radio frequency chip, and the compatible port has a capability of being electrically connected to the first pin. In this example, the compatible port may not occupy a pin of the chip, but remain electrically connected to the output end of the second switch assembly internally. In this case, a quantity of pins of the chip is reduced when compatibility of different antenna solutions is achieved.

It should be understood that the technical features of the technical solutions provided in the second aspect to the fourth aspect can all correspond to the technical solution provided in the first aspect and the possible designs of the first aspect, so that similar beneficial effects can be achieved. Details are not described herein again.

### BRIEF DESCRIPTION OF DRAWINGS

FIG. 1 is a schematic diagram of providing a communication link in an electronic device;
FIG. 2 is a schematic diagram of logic of a radio frequency module;
FIG. 3 is a schematic diagram of a radio frequency chip;
FIG. 4 is a schematic diagram of logic of a radio frequency module;
FIG. 5 is a schematic diagram of logic of a radio frequency module;
FIG. 6 is a schematic diagram of a radio frequency chip;
FIG. 7 is a schematic diagram of logic of a radio frequency module;
FIG. 8 is a schematic composition diagram of an electronic device according to an embodiment of this application;
FIG. 9 is a schematic diagram of logic of a radio frequency module according to an embodiment of this application;
FIG. 10 is a schematic diagram of a link set and a switch assembly according to an embodiment of this application;
FIG. 11 is a schematic diagram of a radio frequency chip according to an embodiment of this application;
FIG. 12 is a schematic diagram of a radio frequency chip according to an embodiment of this application;
FIG. 13 is a schematic diagram of a radio frequency chip according to an embodiment of this application;
FIG. 14 is a schematic diagram of logic of a radio frequency module according to an embodiment of this application;
FIG. 15 is a schematic diagram of logic of a radio frequency module according to an embodiment of this application;
FIG. 16 is a schematic diagram of logic of a radio frequency module according to an embodiment of this application;
FIG. 17 is a schematic diagram of logic of a radio frequency module according to an embodiment of this application;
FIG. 18 is a schematic diagram of logic of a radio frequency module according to an embodiment of this application;
FIG. 19 is a schematic diagram of logic of a radio frequency module according to an embodiment of this application;
FIG. 20 is a schematic diagram of logic of a radio frequency module according to an embodiment of this application;
FIG. 21 is a schematic diagram of a radio frequency chip according to an embodiment of this application;
FIG. 22 is a schematic diagram of logic of a radio frequency module according to an embodiment of this application;
FIG. 23 is a schematic diagram of logic of a radio frequency module according to an embodiment of this application;
FIG. 24 is a schematic composition diagram of an electronic device according to an embodiment of this application; and
FIG. 25 is a schematic composition diagram of a chip system according to an embodiment that does not relate to the subject matter of the enclosed claims.

### DESCRIPTION OF EMBODIMENTS

Currently, an electronic device such as a smartwatch or a smartphone may provide a user with a wireless communication function.

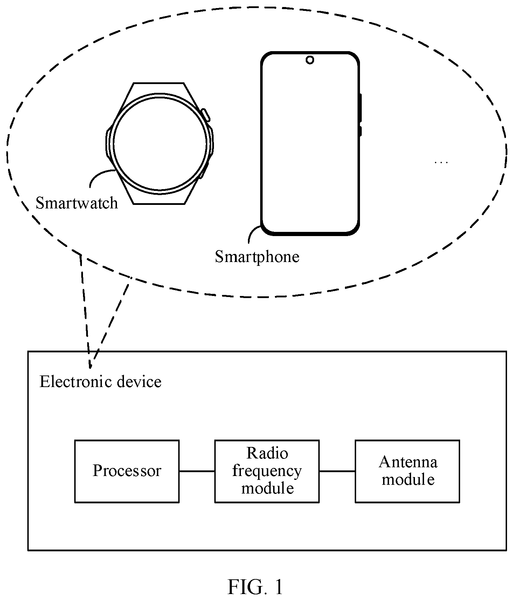

For example, refer to FIG. 1. A processor, a radio frequency module, and an antenna module that are connected to each other may be disposed in an electronic device to support the wireless communication function. The processor may be configured to perform digital domain processing of a signal. The radio frequency module may be configured to perform radio frequency domain (that is, analog domain) processing of a signal. The antenna module may be configured to convert an analog signal into an electromagnetic wave for transmission to achieve a transmission function. Alternatively, the antenna module may be configured to convert an electromagnetic wave into an analog signal and transmit the analog signal to the radio frequency module to achieve a receiving function.

In some implementations, the radio frequency module may include components such as a signal amplifier and a filter. As logical division, the radio frequency module may include a plurality of radio frequency links. Each radio frequency link may correspond to a receive (RX) band and/or a transmit (TX) band of a band.

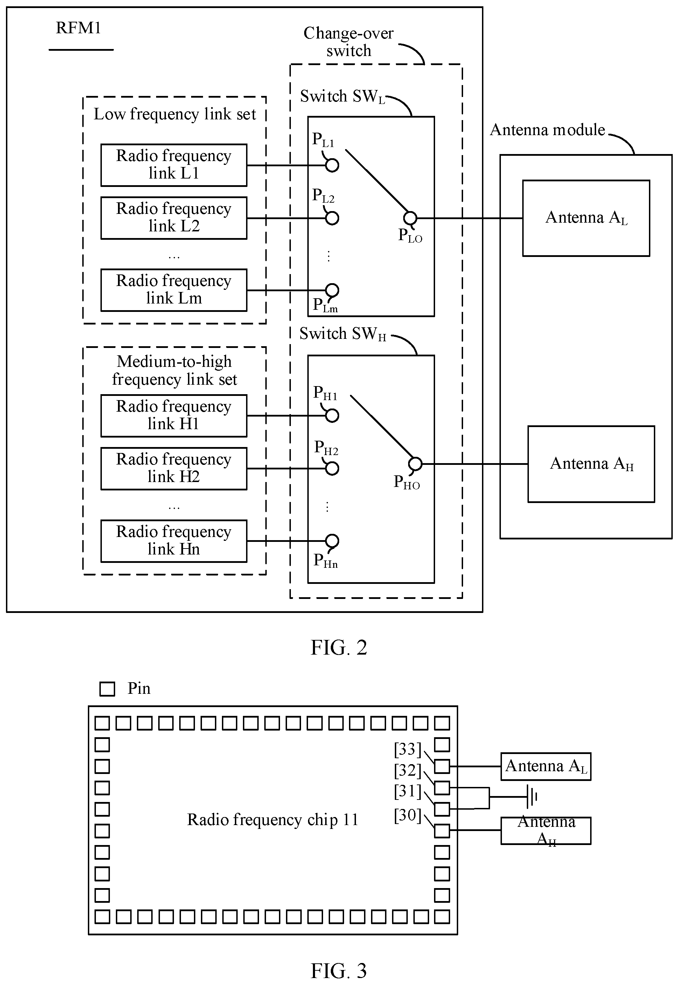

For example, as shown in FIG. 2, the radio frequency module (such as RFM1) may include a low frequency link set and a medium-high band link set.

The low frequency link set may be configured to support radio frequency domain processing of a low frequency signal. In this application, the low frequency signal may correspond to a signal with a frequency between 600 MHz and 1 GHz. In this example shown in FIG. 2, the low frequency link set may include radio frequency links respectively corresponding to signals with different low bands. For example, the low frequency link set may include a radio frequency link L1, a radio frequency link L2, ..., and a radio frequency link Lm.

The medium-high band link set may be configured to support radio frequency domain processing of a medium-to-high frequency signal. In this application, the medium-high band signal may correspond to a signal with a frequency between 1.4 GHz and 3 GHz. In this example shown in FIG. 2, the medium-high band link set may include radio frequency links respectively corresponding to signals with different medium-high bands. For example, the medium-high band link set may include a radio frequency link H1, a radio frequency link H2, ..., and a radio frequency link Hn.

In different implementations, the antenna module shown in FIG. 1 may include at least one antenna design.

For example, in some implementations, the antenna module may include an antenna (for example, denoted as an antenna A_{LH}). An operating band of the antenna A_{LH} may cover a low frequency and a medium-high band. In this example, this antenna design may be referred to as a single-antenna solution.

In some other implementations, the antenna module may include two antennas (for example, denoted as an antenna A_{L} and an antenna A_{H}). An operating band of the antenna A_{L} may cover a low band. An operating band of the antenna A_{H} may cover a medium-high band. In this example, this antenna design may be referred to as a dual-antenna solution.

It should be understood that the electronic device generally only operates in one band at a same time point when performing wireless communication. In this case, at a current time point, it is necessary to electrically connect a radio frequency link of a corresponding band to a corresponding antenna. In this regard, a change-over switch located between the radio frequency link and the antenna module may be disposed in the electronic device. The electronic device may control the change-over switch based on a current communication band to electrically connect the radio frequency link of the corresponding band to the corresponding antenna.

For example, the dual-antenna solution is used as an example.

Still refer to FIG. 2. In this example, the change-over switch may include a switch SW_{L} and a switch SW_{H}. The switch SW_{L} is configured to establish an electrical connection between a corresponding low frequency link set and the antenna A_{L} when the electronic device operates at a low frequency. The switch SW_{H} is configured to establish an electrical connection between a corresponding medium-high band link set and the antenna A_{L} when the electronic device operates at a medium-high band.

As shown in FIG. 2, SW_{L} may include m input ends, such as P_{L1}, P_{L2}, ..., and P_{Lm}. The m input ends may be electrically connected to the radio frequency link L1 to the radio frequency link Lm, respectively. SWL may further include one output end, such as P_{LO}. P_{LO} may be electrically connected to the antenna A_{L} covering the low band.

Similar to SW₁, SW_{H} may include n input ends, such as P_{H1}, P_{H2}, ..., and P_{Hn}. The n input ends may be electrically connected to the radio frequency link H1 to the radio frequency link Hn, respectively. SW_{H} may further include one output end, such as P_{HO}. P_{HO} may be electrically connected to the antenna A_{H} covering the medium-high band.

FIG. 2 is a schematic diagram of logic of electrical connections between the radio frequency links and the antenna module in the dual-antenna solution. In some implementations, the radio frequency module (RFM1) may achieve a function of the radio frequency module by using an integrated radio frequency chip.

For example, FIG. 3 is a schematic diagram of a radio frequency chip (such as a radio frequency chip 11) that can provide the logic shown in FIG. 2. The radio frequency chip 11 may integrate the low frequency link set and the medium-high band link set shown in FIG. 2. The radio frequency chip 11 may further integrate the switch SW_{L} and the switch SW_{H} shown in FIG. 2.

As shown in FIG. 3, the radio frequency chip 11 may include a plurality of pins. Each pin corresponds to an input/output port of a signal. Corresponding to the schematic diagram of the logic of FIG. 2, the pin [33] on the radio frequency chip 11 shown in FIG. 3 may correspond to P_{LO} that is electrically connected to the antenna A_{L}, so as to provide a low frequency communication function. The pin [30] on the radio frequency chip 11 may correspond to P_{HO} that is electrically connected to the antenna A_{H}, so as to provide a medium-high band communication function.

In some designs, as shown in FIG. 3, to improve isolation between two ports (such as the pin [30] and the pin [33]), the pin [31] and/or the pin [32] between the pin [30] and the pin [33] may be grounded.

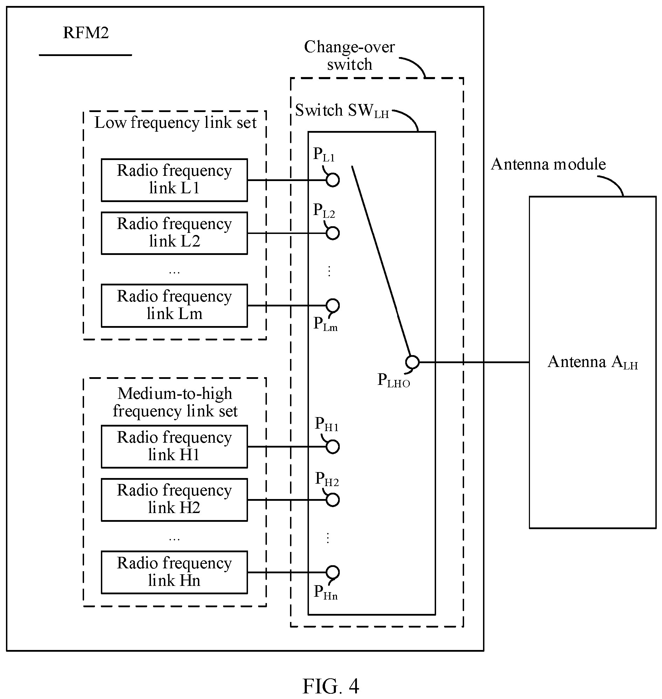

In FIG. 2 and FIG. 3, a specific implementation of an electrical connection between the radio frequency module (such as RFM1) and the antenna module in the dual-antenna solution is described. The following uses an example of a specific implementation of an electrical connection between a radio frequency module and an antenna module in the single-antenna solution for description with reference to FIG. 4.

As shown in FIG. 4, a radio frequency module (such as RFM2) may still include a low frequency link set and a medium-high band link set. Different from the description in FIG. 2 or FIG. 3, in this example, because the antenna module may cover all bands through one antenna (such as the antenna A_{LH}), the antenna module may have one port. Correspondingly, a change-over switch in this example may be configured to electrically connect any one of the low frequency link set and the medium-high band link set to the antenna A_{LH}.

For example, in the example shown in FIG. 4, the change-over switch may include a switch SW_{LH}. The switch SW_{LH} may include m+n input ends. The m+n input ends may be electrically connected to m radio frequency links of the low frequency link set and n radio frequency links of the medium-high band link set, respectively. The switch SW_{LH} may include one output end, such as P_{LHO}. P_{LHO} may be electrically connected to the antenna A_{LH}. In this case, when the electronic device operates in any one of a medium band, a high band, and a low band, the electronic device may control the switch SW_{LH} to electrically connect a corresponding radio frequency link to the antenna A_{LH}, thereby implementing signal transmission and reception in the band.

It should be noted that similar to the schematic diagram shown in FIG. 3, RFM2 shown in FIG. 4 may also achieve a function corresponding to RFM2 by using the radio frequency chip.

In the foregoing example, when the radio frequency module includes the switch SW_{L} shown in FIG. 2, the radio frequency module may be configured to support the dual-antenna solution. When the radio frequency module includes the switch SW_{LH} shown in FIG. 4, the radio frequency module may be configured to support the single-antenna solution.

With reference to FIG. 2 to FIG. 4, from a logical perspective, the radio frequency module (such as RFM1) shown in FIG. 2 may also be configured to support the single-antenna solution.

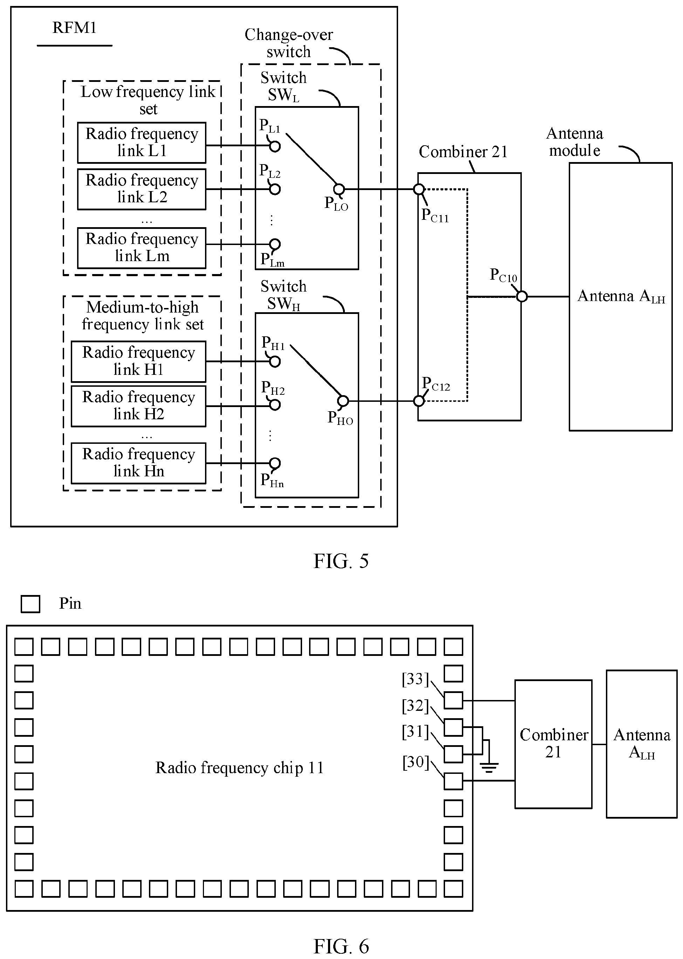

For example, as shown in FIG. 5, because the antenna module has only one port in the single-antenna solution, when composition of the radio frequency module shown in FIG. 2 is used, it is necessary to additionally provide a combiner between RFM1 and the antenna module, to combine signals of two output ends of RFM1. In this way, one channel of signal obtained through combining processing is transmitted to an antenna (such as the antenna A_{LH}) to implement transmission and reception of a low frequency signal, a medium frequency signal, and a high frequency signal.

For example, as shown in FIG. 5, the combiner (such as a combiner 21) may include two input ends, denoted as P_{C11} and P_{C12}, respectively. The two input ends may be electrically connected to output ends of the switch SW_{L} and the switch SW_{H}, respectively. For example, P_{C11} may be electrically connected to P_{LO}, and P_{C12} may be electrically connected to P_{HO}. For example, the combiner 21 may include one output end, such as P_{C10}. P_{C10} may be electrically connected to the antenna A_{LH}.

This corresponds to the example of the radio frequency chip 11 shown in FIG. 3. As shown in FIG. 6, when the radio frequency chip 11 is used in the single-antenna solution, the pin [33] and the pin [30] may be electrically connected to the two input ends of the combiner 21, respectively. The output end of the combiner 21 may be electrically connected to the antenna A_{LH}. Therefore, when the electronic device operates in any one of a low/medium/high band, a corresponding radio frequency link may be electrically connected to the antenna A_{LH} by using the combiner 21.

In this case, radio frequency processing in the single-antenna solution can be implemented by using the composition of the radio frequency module shown in FIG. 2.

Accordingly, the composition of the radio frequency module shown in FIG. 4 can also be used to support the dual-antenna solution.

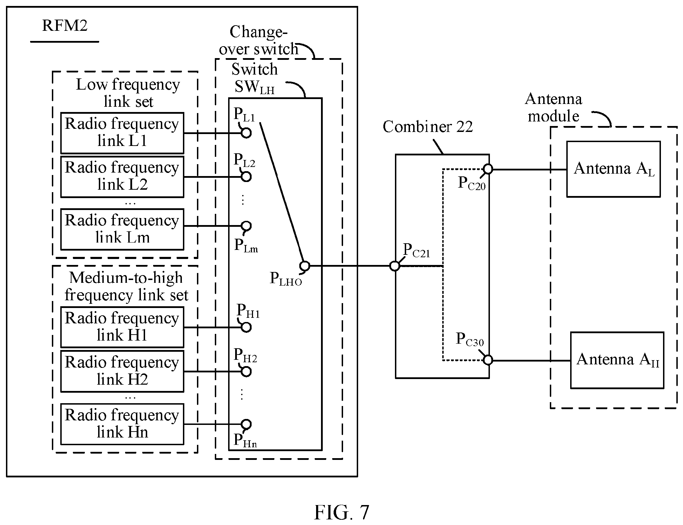

For example, as shown in FIG. 7, because in the dual-antenna solution, the antenna module may include two antennas (such as, the antenna A_{L} and the antenna A_{H}) corresponding to two antenna ports, when RFM2 shown in FIG. 4 is used, an additional combiner (such as the combiner 22) may also be provided. The combiner 22 may include one input end, such as P_{C21}. P_{C21} may be electrically connected to the output end (that is, P_{LHO}) of the switch SW_{LH}. The combiner 22 may further include two output ends, such as P_{C20} and P_{C30}. P_{C20} may be electrically connected to the antenna A_{L}, and PC30 may be electrically connected to the antenna A_{H}. Therefore, the combiner 22 may perform split processing on a signal from one output end of RFM2, and transmit one channel of signal obtained through split processing to a corresponding antenna.

However, in the designs shown in FIG. 4 to FIG. 7, an additional combiner needs to be added between the radio frequency module and the antenna module. Provision of the combiner increases an insertion loss of an entire communication link and significantly affects quality of wireless communication. In addition, the provision of the combiner occupies design space on a circuit board, causing increase of design difficultly of the circuit board.

Therefore, to enable the electronic device to perform wireless communication with a good quality and simplify the design of the circuit board, it is necessary to select a corresponding radio frequency module based on an antenna solution. For example, when the electronic device uses the single-antenna solution, it is necessary to provide RFM1 shown in FIG. 2 or FIG. 3 in the electronic device. For another example, when the electronic device uses the dual-antenna solution, it is necessary to provide RFM2 shown in FIG. 4 in the electronic device.

However, a coupling relationship between the radio frequency module and the antenna solution causes designs of the radio frequency module and the antenna solution to be limited, and it is not beneficial to implement wireless communication in the electronic device.

To resolve the foregoing problems, the radio frequency module in the technical solution provided in this embodiment of this application can be used in both the single-antenna solution and the dual-antenna solution. Therefore, decoupling of the radio frequency module and the antenna solution is implemented, so that the antenna solution is flexible when the radio frequency module is used in the electronic device.

The technical solution provided in this embodiment of this application is described below in detail with reference to the accompanying drawings.

It should be noted that the technical solution provided in this embodiment of this application is applied to the electronic device. The electronic device may include at least one of a mobile phone (such as a smartphone), a foldable electronic device, a tablet computer, a desktop computer, a laptop computer, a handheld computer, a notebook computer, an ultra-mobile personal computer (ultra-mobile personal computer, UMPC), a netbook, a cellular phone, a personal digital assistant (personal digital assistant, PDA), an augmented reality (augmented reality, AR) device, a virtual reality (virtual reality, VR) device, an artificial intelligence (artificial intelligence, AI) device, a wearable device (such as a smartwatch), a vehicle-mounted device, a smart home device, or a smart city device. A specific type of the electronic device is not specially limited in this embodiment of this application.

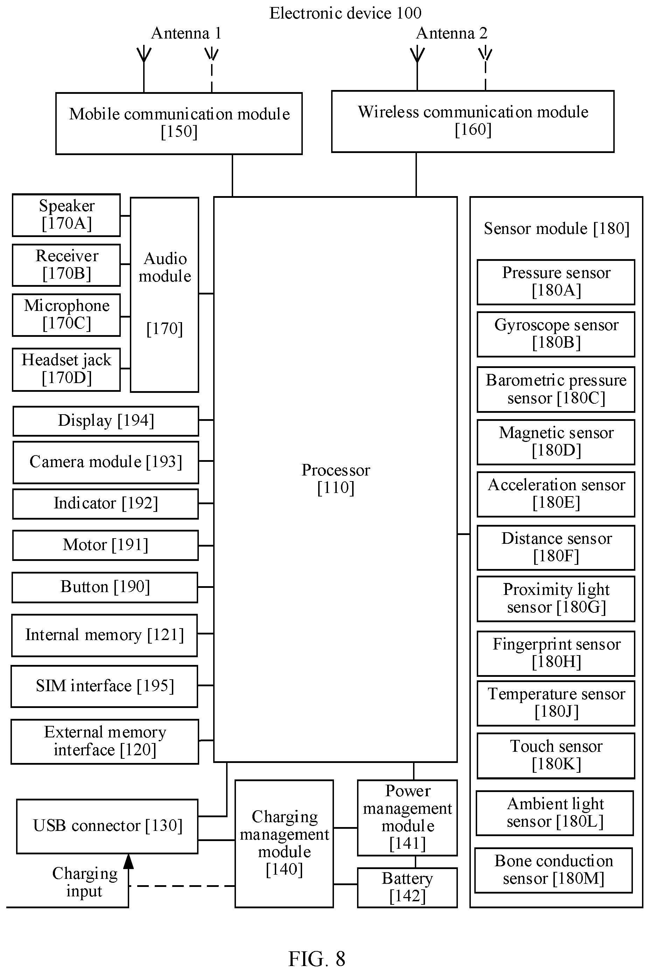

FIG. 8 is a schematic composition diagram of an electronic device 100 according to an embodiment of this application.

The electronic device 100 may include a processor 110, an external memory interface 120, an internal memory 121, a universal serial bus (universal serial bus, USB) connector 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a bottom 190, a motor 191, an indicator 192, a camera module 193, a display 194, a subscriber identity module (subscriber identification module, SIM) card interface 195, and the like. The sensor module 180 may include a pressure sensor 180A, a gyroscope sensor 180B, a barometric pressure sensor 180C, a magnetic sensor 180D, an acceleration sensor 180E, a distance sensor 180F, a proximity sensor 180G, a fingerprint sensor 180H, a temperature sensor 180J, a touch sensor 180K, an ambient light sensor 180L, a bone conduction sensor 180M, and the like.

It may be understood that an example structure in this embodiment of this application does not constitute a specific limitation on the electronic device 100. In some other embodiments of this application, the electronic device 100 may include more or fewer components than those shown in the figure, some components may be combined, some components may be split, or different component arrangements may be used. The components shown in the figure may be implemented by using hardware, software, or a combination of software and hardware.

As the example in FIG. 8, the processor 110 may include one or more processing units. For example, the processor 110 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, and/or a neural-network processing unit (neural-network processing unit, NPU). Different processing units may be separate devices, or may be integrated into one or more processors.

The processor may generate an operation control signal based on instruction operation code and a timing signal, to complete control of fetching and instruction execution.

A memory may also be disposed in the processor 110 and is configured to store instructions and data. In some embodiments, the memory in the processor 110 may be a cache. The memory may store instructions or data used or frequently used by the processor 110. If the processor 110 needs to use the instructions or the data, the processor 110 may directly invoke the instructions or the data from the memory. Repeated access is avoided, and waiting time of the processor 110 is reduced, thereby improving system efficiency.

A wireless communication function of the electronic device 100 may be implemented by using the antenna 1, the antenna 2, the mobile communication module 150, the wireless communication module 160, the modem processor, the baseband processor, and the like.

The antenna 1 and the antenna 2 are configured to transmit and receive electromagnetic wave signals. Each antenna of the electronic device 100 may be configured to cover one or more communication bands. Different antennas may also be multiplexed to improve antenna utilization. For example, the antenna 1 may be multiplexed into a diversity antenna of a wireless local area network. In some other embodiments, the antenna may be used in combination with a tuning switch.

The mobile communication module 150 may provide a solution applied to the electronic device 100 for wireless communication including 2G/3G/4G/5G and the like. The mobile communication module 150 may include at least one filter, a switch, a power amplifier, a low noise amplifier (low noise amplifier, LNA), and the like. The mobile communication module 150 may receive an electromagnetic wave via the antenna 1, perform processing such as filtering and amplification on the received electromagnetic wave, and transmit the electromagnetic wave to the modem processor for demodulation. The mobile communication module 150 may further amplify a signal obtained after modulation by the modem processor, and convert the signal into an electromagnetic wave for radiation via the antenna 1. In some embodiments, at least some functional modules of the mobile communication module 150 may be disposed in the processor 110. In some embodiments, at least some functional modules of the mobile communication module 150 and at least some modules of the processor 110 may be disposed in a same device.

The modem processor may include a modulator and a demodulator. The modulator is configured to modulate a low frequency baseband signal to be sent into a medium-high band signal. The demodulator is configured to demodulate the received electromagnetic wave signal into a low frequency baseband signal. Then, the demodulator then transmits the demodulated low frequency baseband signal to the baseband processor for processing. After being processed by the baseband processor, the low frequency baseband signal is transmitted to the application processor. The application processor outputs a sound signal by an audio device (not limited to the speaker 170A, the receiver 170B, and the like), or displays an image or a video by using the display 194. In some embodiments, the modem processor may be a separate device. In some other embodiments, the modem processor may be independent of the processor 110 and may be disposed in a same device as the mobile communication module 150 or other functional modules.

The wireless communication module 160 may provide a solution to wireless communication applied to the electronic device 100, for example, a wireless local area network (wireless local area networks, WLAN) (for example, a wireless fidelity (wireless fidelity, Wi-Fi) network), Bluetooth (bluetooth, BT), a Bluetooth low energy (bluetooth low energy, BLE), an ultra wide band (ultra wide band, UWB), a global navigation satellite system (global navigation satellite system, GNSS), frequency modulation (frequency modulation, FM), near field communication (near field communication, NFC), and an infrared (infrared, IR) technology. The wireless communication module 160 may be one or more devices integrating at least one communication processing module. The wireless communication module 160 receives an electromagnetic wave via the antenna 2, performs frequency modulation and filtering processing on an electromagnetic wave signal, and sends a processed signal to the processor 110. The wireless communication module 160 may further receive a to-be-sent signal from the processor 110, perform frequency modulation and amplification on the to-be-sent signal, and convert the to-be-sent signal into an electromagnetic wave for radiation via the antenna 2.

In some embodiments, in the electronic device 100, the antenna 1 is coupled to the mobile communication module 150, and the antenna 2 is coupled to the wireless communication module 160, so that the electronic device 100 may communicate with a network and another electronic device by using a wireless communication technology. The wireless communication technology may include a global system for mobile communications (global system for mobile communications, GSM) technology, a general packet radio service (general packet radio service, GPRS) technology, a code division multiple access (code division multiple access, CDMA) technology, a wideband code division multiple access (wideband code division multiple access, WCDMA) technology, a time-division code division multiple access (time-division code division multiple access, TD-SCDMA), a long term evolution (long term evolution, LTE) technology, a BT technology, a GNSS technology, a WLAN technology, an NFC technology, an FM technology, an IR technology, and/or the like. The GNSS may include a global positioning system (global positioning system, GPS), a global navigation satellite system (global navigation satellite system, GLONASS), a BeiDou navigation satellite system (beidou navigation satellite system, BDS), a quasi-zenith satellite system (quasi-zenith satellite system, QZSS), a satellite based augmentation system (satellite based augmentation systems, SBAS), and/or the like.

The technical solutions provided in this embodiment of this application may be applied to the electronic device shown in FIG. 8.

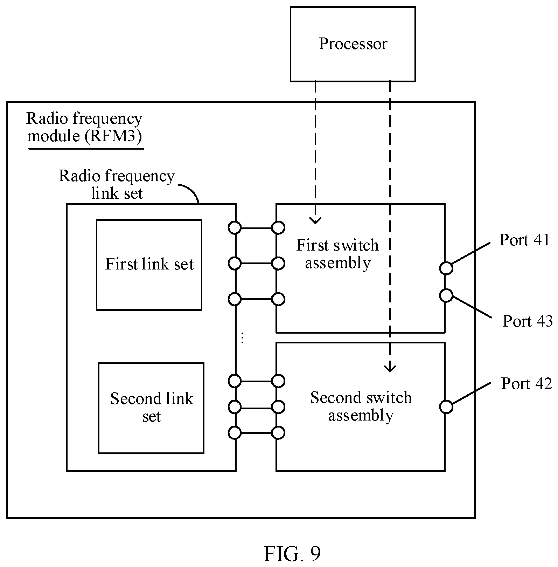

FIG. 9 is a schematic composition diagram of a radio frequency module according to an embodiment of this application. Logical composition of the radio frequency module can achieve effects of the technical solution provided in this embodiment of this application. To be specific, a same radio frequency module can support radio frequency domain processing of different antenna solutions.

As shown in FIG. 9, the radio frequency module (such as RFM3) provided in this example may include a radio frequency link set and at least two switch assemblies.

The radio frequency link set may include a plurality of radio frequency links. Each radio frequency link corresponds to TX and/or RX of a communication band. In this example, the radio frequency links may include at least one of a power amplifier, a filter, a phase shifter, an amplitude attenuator, or the like. The radio frequency link is configured to perform radio frequency domain processing on a corresponding communication band.

In the example in FIG. 9, the plurality of radio frequency links may be divided into different sets based on levels of bands corresponding to the plurality of radio frequency links.

For example, the radio frequency link set may include a first link set and a second link set. The first link set and the second link set may each include at least one radio frequency link.

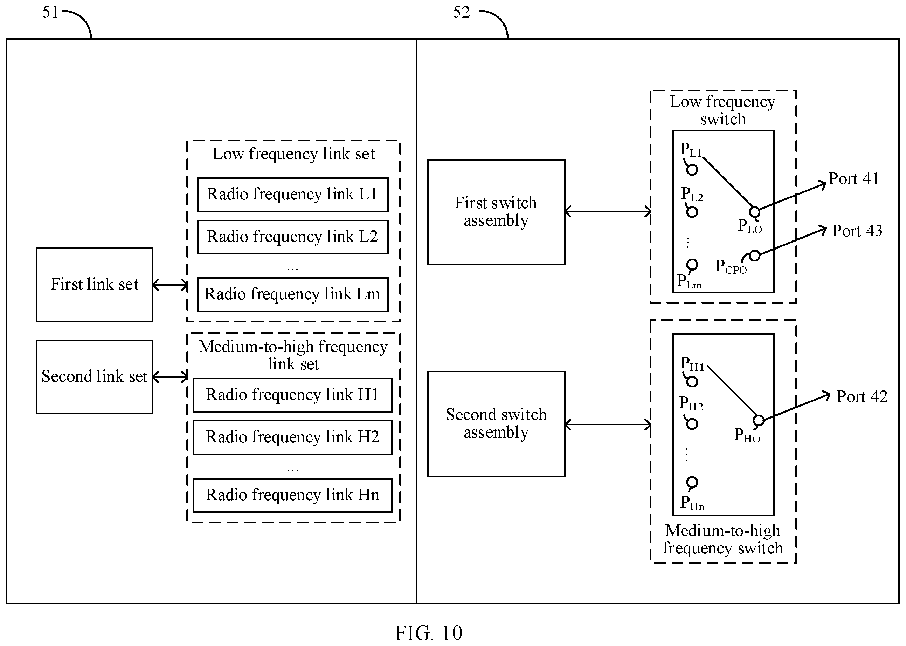

In some embodiments, as shown in 51 of FIG. 10, the first link set may include m radio frequency links, and the m radio frequency links may separately correspond to a TX band and/or an RX band of a low band. For example, the m radio frequency links may include a radio frequency link L1 to a radio frequency link Lm. In this application, the first radio frequency link set may also be referred to as a low frequency link set.

In some other embodiments, as shown in 51 of FIG. 10, the second link set may include n radio frequency links, and the n radio frequency links may separately correspond to a TX band and/or an RX band of a medium-high band. For example, the n radio frequency links may include a radio frequency link H1 to a radio frequency link Hn. In this application, the second radio frequency link set may also be referred to as a medium-high band link set.

It should be noted that the division of the radio frequency link set in FIG. 9 and FIG. 10 is only an example. In some other logical divisions, the radio frequency link set may alternatively be divided into other parts, such as a low frequency link set, a medium frequency link set, and a high frequency link set.

Still refer to FIG. 9. RFM3 provided in this embodiment of this application may further include at least two switch assemblies. It may be understood that most of time points, only one radio frequency link needs to be electrically connected to a corresponding antenna when the electronic device is operating. Then, the at least two switch assemblies may be configured to switch an operating state based on a current operating band, to achieve a perspective of electrically connecting a radio frequency link corresponding to the operating band to an antenna. In this example, a processor of the electronic device may be electrically connected to a control end of each of the at least two switch assemblies, so that the electronic device controls the switch assemblies to operate in a desired state by using the processor.

For example, an example in which the radio frequency link set includes the first link set and the second link set is used. The at least two switch assemblies may include a first switch assembly corresponding to the first link set. The at least two switch assemblies may further include a second switch assembly corresponding to the second link set. The first switch assembly may include a plurality of input ends. A quantity of input ends of the first switch assembly may be greater than or equal to a quantity of radio frequency links included in the first link set. The first switch assembly may further include an output end (such as a port 41). An output end of the first switch assembly may be configured to be electrically connected to an antenna. Similarly, the second switch assembly may include a plurality of input ends. A quantity of input ends of the second switch assembly may be greater than or equal to a quantity of radio frequency links included in the second link set. The second switch assembly may further include an output end (such as a port 42). The output end of the second switch assembly may be configured to be electrically connected to an antenna.

It should be noted that in this embodiment of this application, the first switch assembly or the second switch assembly may further include a compatible port (such as a port 43). The compatible port may implement cascading of the first switch assembly and the second switch assembly.

As an example, an example in which the compatible port is provided on the first switch assembly is used.

As shown in 52 of FIG. 10, the first switch assembly may include m input ends. For example, the m input ends may include P_{L1} to P_{Lm}. The m input ends may be electrically connected to the m radio frequency links in the first link set (such as the low frequency link set), respectively. For example, P_{L1} is electrically connected to the radio frequency link L1, P_{L2} is electrically connected to the radio frequency link L2, and so on.

The first switch assembly may further include an output end, such as P_{LO}. P_{LO} may correspond to the port 41 shown in FIG. 9. The port 41 may be configured to be electrically connected to a low frequency antenna (such as the antenna A_{L}) in the dual-antenna solution. The port 41 may alternatively be configured to be electrically connected to a full-band antenna (such as the antenna A_{HL}) in the single-antenna solution.

In a specific implementation, using m = 16 as an example, the first switch assembly may achieve a function of the first switch assembly by using SP16T. In this example, when the first switch assembly is used for low frequency switching, the first switch assembly may also be referred to as a low frequency switch.

Similar to the first switch assembly, as shown in 52 of FIG. 10, the second switch assembly may include n input ends. For example, the n input ends may include P_{H1} to P_{Hn}. The n input ends may be electrically connected to the n radio frequency links in the second link set (such as the medium-high band link set), respectively. For example, P_{H1} is electrically connected to the radio frequency link H1, P_{H2} is electrically connected to the radio frequency link H2, and so on.

The second switch assembly may further include an output end, such as P_{HO}. P_{HO} may correspond to the port 42 shown in FIG. 9. The port 42 may be configured to be electrically connected to a medium-high band antenna (such as the antenna A_{H}) in the dual-antenna solution. The port 42 may alternatively be configured to be electrically connected to a full-band antenna (such as the antenna A_{LH}) in the single-antenna solution.

In a specific implementation, using n = 32 as an example, the second switch assembly may achieve a function of the second switch assembly by using SP32T. In this example, when the second switch assembly is used for medium-high band switching, the second switch assembly may also be referred to as a medium-high band switch.

It should be noted that in this embodiment of this application, the first switch assembly may further include a compatible port, such as a P_{CPO}. P_{CPO} may correspond to the port 43 shown in FIG. 9.

In the dual-antenna solution, the port 43 may be grounded.

In the single-antenna solution, the port 43 may be configured to couple to the output end of the second switch assembly (such as P_{HO} or the port 42). Therefore, when the electronic device operates at a medium-high band, a radio frequency link in the medium-high band link set may be electrically connected to the port 41 through the port 42 and the port 43, to further implement flow of a medium-high band signal between the antenna (such as the antenna A_{LH}) and the medium-high band link set.

To achieve the foregoing objective, in the single-antenna solution, an antenna may be electrically connected to an output end of a switch assembly provided with a compatible port. For example, in the foregoing example, the compatible port is provided on the first switch assembly, and an antenna covering a full-band may be electrically connected to the output end 41 of the first switch assembly. For another example, when the compatible port is provided on the second switch assembly, the antenna covering the full-band may be electrically connected to the output end 42 of the second switch assembly.

In this case, a same radio frequency module can support both two different antenna solutions by using the logic design of the radio frequency module shown in FIG. 9 or FIG. 10. Therefore, flexibility of the radio frequency module and the antenna design is improved.

It may be understood that, in the solution provided in this embodiment of this application, a switching mechanism in the radio frequency module uses an implementation of a plurality of switch assemblies. Compared with the switch solution of RFM2 shown in FIG. 4, arrangement of the plurality of switch assemblies can make a small switch insertion loss when a specific path is on, to improve signal communication quality.

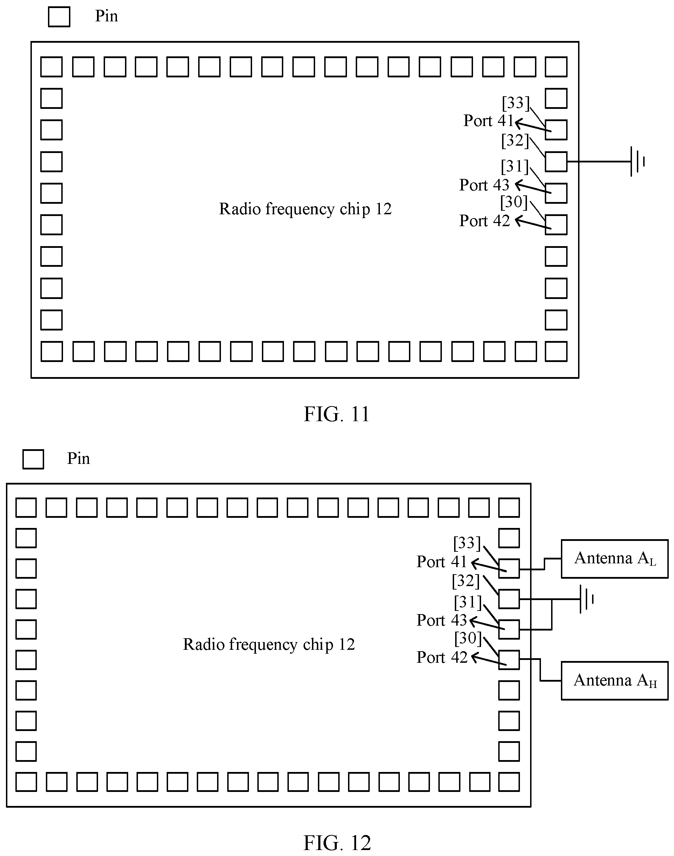

With reference to the description of FIG. 3 and FIG. 6, in a specific implementation, the radio frequency module provided in this embodiment of this application may alternatively correspond to an integrated radio frequency chip. For example, refer to FIG. 11. A radio frequency chip 12 may have the logical composition shown in FIG. 9 or FIG. 10.

In the example shown in FIG. 11, the radio frequency chip 12 may also include a plurality of pins. The pins may have different labels.

For example, a pin [33] of the radio frequency chip 12 may correspond to the port 41 shown in FIG. 9. The pin [33] is configured to be electrically connected to the antenna A_{L} covering the low band in the dual-antenna solution. The pin [33] is alternatively configured to be electrically connected to the antenna A_{LH} covering the full-band in the single-antenna solution.

A pin [30] of the radio frequency chip 12 may correspond to the port 42 shown in FIG. 9. The pin [30] is configured to be electrically connected to the antenna A_{LH} covering the medium-high band in the dual-antenna solution.

At least one pin disposed between the pin [30] and the pin [33] of the radio frequency chip 12 may be grounded. For example, a pin [31] or a pin [32] may be grounded, to improve dual-port isolation of the pin [30] and the pin [33]. In the following example, an example in which the pin pin [32] is grounded is used.

A pin corresponding to the compatible port 43 may also be included between the pin [30] and the pin [33] of the radio frequency chip 12. For example, the pin [31] may be configured to provide a function of the compatible port 43.

In the example shown in FIG. 11, the output end 41 of the first switch assembly, the output end 42 of the second switch assembly, and the compatible port 43 may all correspond to a pin on the radio frequency chip 12. In this way, a designer can be allowed to achieve corresponding functions based on different scenario requirements through electrical connections between pins.

An example in which the radio frequency chip 12 is carried on a printed circuit board (printed circuit board, PCB) is used.

In the dual-antenna solution, as shown in FIG. 12, the pin [33] may be electrically connected to the antenna A_{L} through a transmission line disposed on a PCB board. The pin [30] may be electrically connected to the antenna A_{H} through a transmission line disposed on the PCB board. The pin [31] may be grounded. In some other embodiments, the pin [31] may alternatively be configured to transmit another signal.

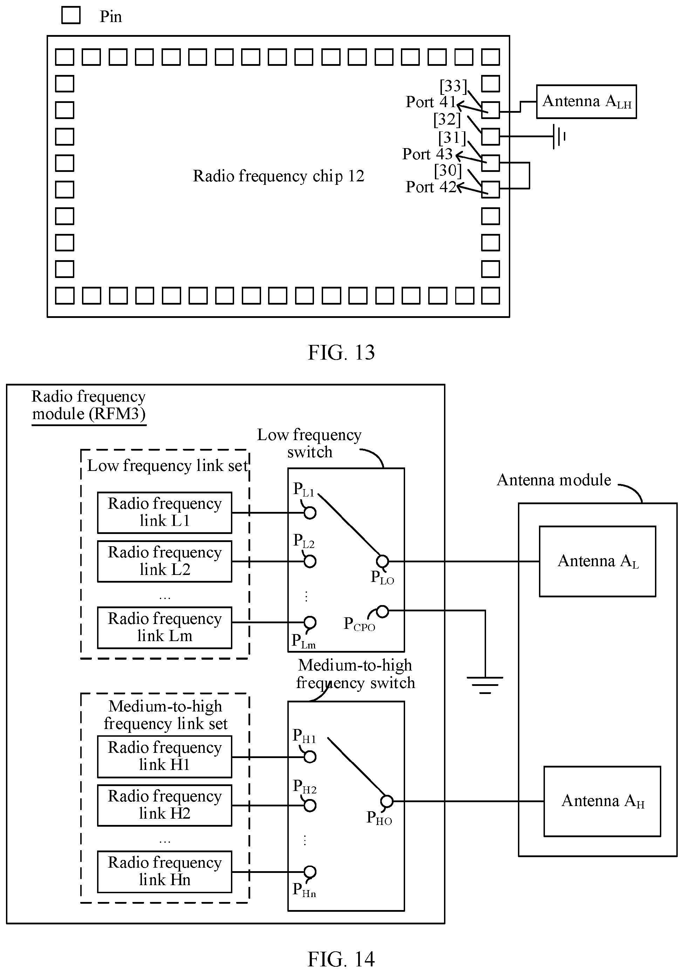

In the single-antenna solution, as shown in FIG. 13, the pin [33] may be electrically connected to the antenna A_{LH} through a transmission line disposed on a PCB board. The pin [30] may be connected to the pin [31] through a transmission line disposed on the PCB board, so that when the electronic device operates at a medium-high band frequency, a medium-high band signal may flow between the medium-high band radio frequency link and the antenna A_{LH} through the pin [30] and the pin [31].

In FIG. 9 to FIG. 13, the logical composition and the specific implementation of the radio frequency module (such as RFM3) provided in this embodiment of this application are briefly described.

The following uses an example of an operating mechanism of RFM3 shown in FIG. 9 to FIG. 13 with reference to the accompanying drawings.

In this example, switch states of the first switch assembly and the second switch assembly may be controlled by the processor of the electronic device. Therefore, as shown in FIG. 9, the processor may be electrically connected to a control end of the first switch assembly and a control end of the second switch assembly separately, so that the processor controls the first switch assembly and the second switch assembly to operate in a corresponding state by using a general-purpose input/output (general-purpose input/output, GPIO) signal and/or a mobile industry processor interface (mobile industry processor interface, MIPI) signal.

For example, refer to FIG. 14. An example in which RFM3 has the logical composition shown in FIG. 10 and is applied to the dual-antenna solution is used.

In the example shown in FIG. 14, the input ends P_{L1} to P_{Lm} of the first switch assembly (that is, the low frequency switch) may be electrically connected to the radio frequency links in the low frequency link set, respectively. The output end P_{LO} of the low frequency switch may be electrically connected to the antenna A_{L} of the antenna module. The antenna A_{L} may be configured to cover the low band.

The input ends P_{H1} to P_{Hn} of the second switch assembly (that is, the medium-high band switch) may be electrically connected to the radio frequency links in the medium-high band link set, respectively. The output end P_{HO} of the medium-high band switch may be electrically connected to the antenna A_{H} of the antenna module. The antenna A_{H} may be configured to cover the medium-high band.

A compatible port P_{CPO} on the first switch assembly may be grounded, to improve dual-port isolation between the output end P_{LO} and the output end P_{HO}.

An example in which the electronic device controls the low frequency switch and the medium-high band switch by using an application processor (AP).

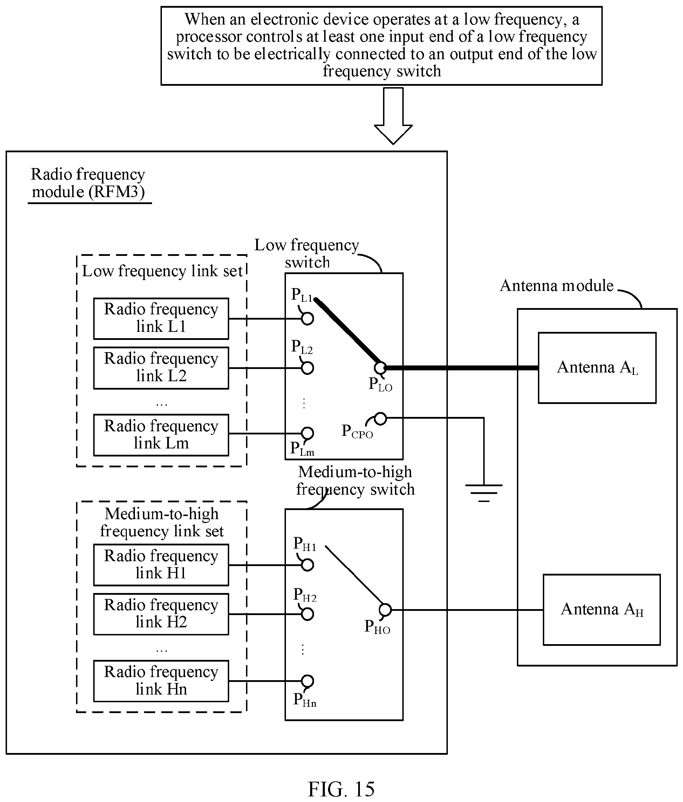

As shown in FIG. 15, in some embodiments, when the electronic device operates at a low frequency, the processor controls at least one input end of the low frequency switch to electrically connect to the output end of the low frequency switch.

For example, when the electronic device operates at a low frequency, the AP may control the low frequency switch to electrically connect a radio frequency link in a low frequency operating band to the port 41, to implement an electrical connection between a low frequency antenna and the radio frequency link in the low frequency operating band.

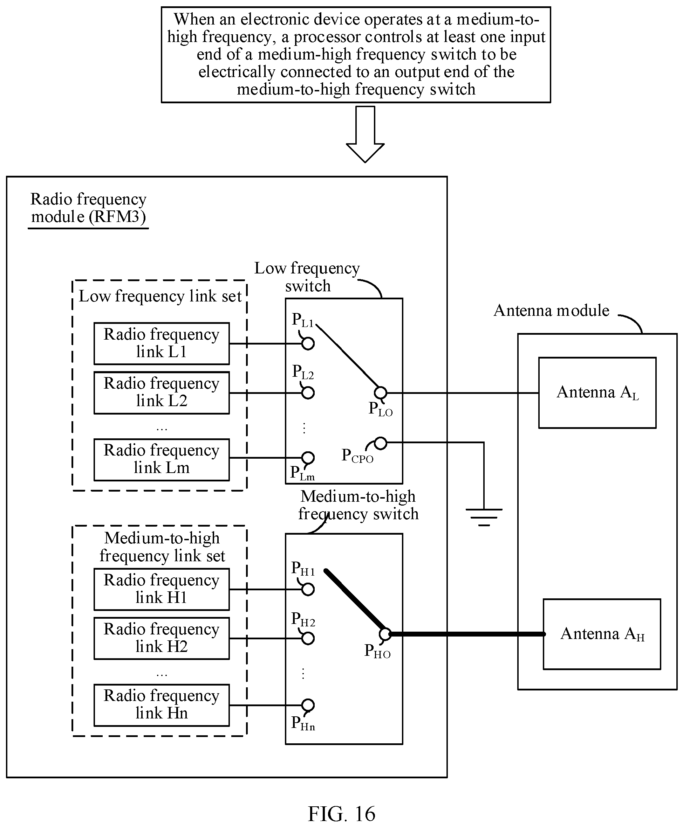

As shown in FIG. 16, in some embodiments, when the electronic device operates at a medium-high band, the processor controls at least one input end of the medium-high band switch to electrically connect to the output end of the medium-high band switch.

For example, when the electronic device operates at a medium frequency or a high frequency, the AP may control the medium-high band switch to electrically connect a radio frequency link in a medium frequency operating band or a high frequency operating band to the port 42, to implement an electrical connection between a medium-high band antenna and the radio frequency link in the medium frequency operating band or a high frequency operating band.

As shown in FIG. 15 and FIG. 16, in a scenario of the dual-antenna solution, the port 41 is not be electrically connected to the compatible port (such as the port 43). Therefore, there is no streaming between a low frequency signal and the medium-high band antenna, or between the medium-high band signal and the low frequency antenna.

In FIG. 14 to FIG. 16, the operating mechanism of RFM3 shown in FIG. 9 to FIG. 13 applied to the dual-antenna solution. The following describes an operating mechanism of RFM3 applied to a single-antenna solution with reference to the accompanying drawings.

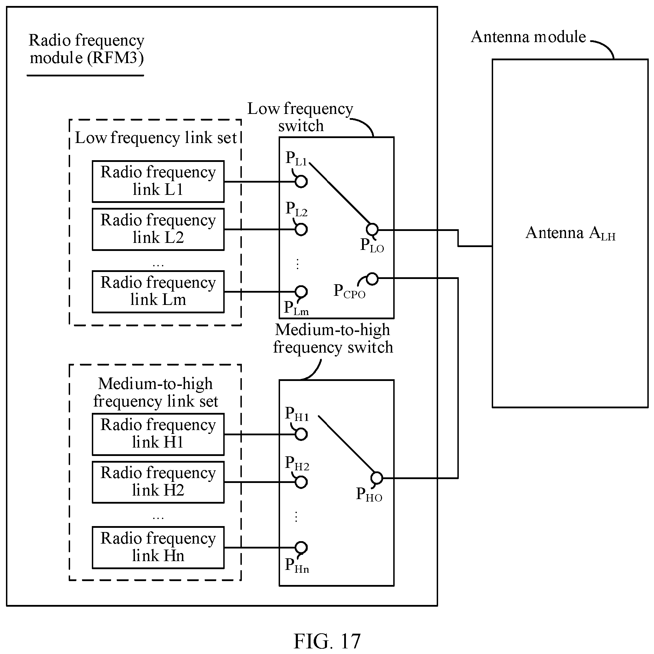

For example, refer to FIG. 17. An example in which RFM3 has the logical composition shown in FIG. 10 and is applied to the single-antenna solution.

In the example shown in FIG. 17, the input ends P_{L1} to P_{Lm} of the first switch assembly (that is, the low frequency switch) may be electrically connected to the radio frequency links in the low frequency link set, respectively. The output end P_{LO} of the low frequency switch may be electrically connected to the antenna A_{LH} that is of the antenna module and that covers the full-band.

The input ends P_{H1} to P_{Hn} of the second switch assembly (that is, the medium-high band switch) may be electrically connected to the radio frequency links in the medium-high band link set, respectively. The output end P_{HO} of the medium-high band switch may be electrically connected to the compatible port P_{CPO} provided on the low frequency switch.

An example in which the electronic device controls the low frequency switch and the medium-high band switch by using an application processor (AP).

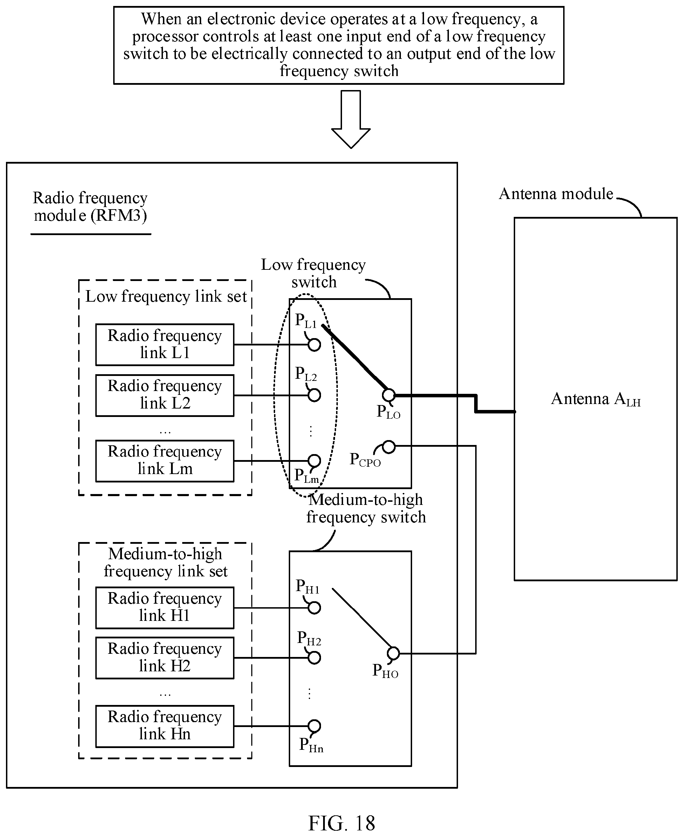

As shown in FIG. 18, in some embodiments, when the electronic device operates at a low frequency, the processor controls at least one input end of the low frequency switch to electrically connect to the output end of the low frequency switch.

For example, when the electronic device operates at a low frequency, the AP may control the low frequency switch to electrically connect a radio frequency link in a low frequency operating band to the port 41, to implement an electrical connection between the antenna A_{LH} and the radio frequency link in the low frequency operating band.

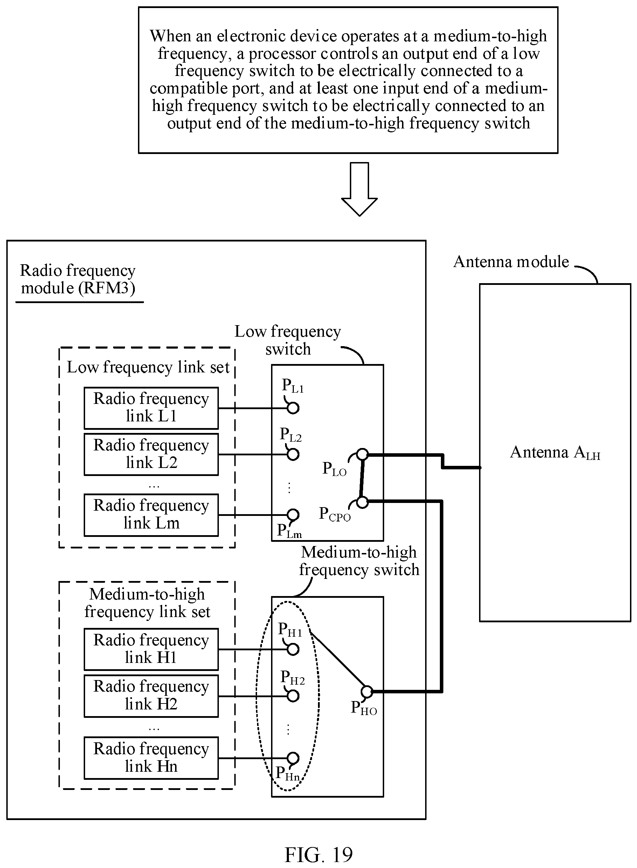

As shown in FIG. 19, in some other embodiments, when the electronic device operates at a medium-high band, the processor controls the output end of the low frequency switch to electrically connect to the compatible port, and controls at least one input end of the medium-high band switch to electrically connect to the output end of the medium-high band switch.

For example, when the electronic device operates at a medium frequency or a high frequency, the AP may control the output end PLO of the low frequency switch to electrically connect to the compatible port P_{CPO}, so that a signal may flow between the antenna A_{LH} and the output end P_{HO} of the medium-high band switch. In addition, the AP may further control the output end P_{HO} of the medium-high band switch to electrically connect to at least one medium-high band link, thereby implementing radio frequency domain processing on a signal in the medium-high band.

In this case, based on the radio frequency module shown in FIG. 9 to FIG. 13, in different scenarios, a flexible and adaptive electrical connection can be performed ports (or pins of the radio frequency chip 12) based on a currently selected antenna solution. Therefore, the processor of the electronic device can implement wireless communication in the single-antenna or dual-antenna scenario based on the foregoing switching logic.

In the foregoing solution description, the radio frequency module may provide a compatible port, so that a designer can perform a hardware adjustment on a PCB board as needed to adapt to the current antenna solution.

In some other embodiments, the compatible port in the radio frequency module may alternatively be integrated internally. The electronic device can use software switching logic based on different antenna solutions, so that the radio frequency module can meet a current antenna solution requirement.

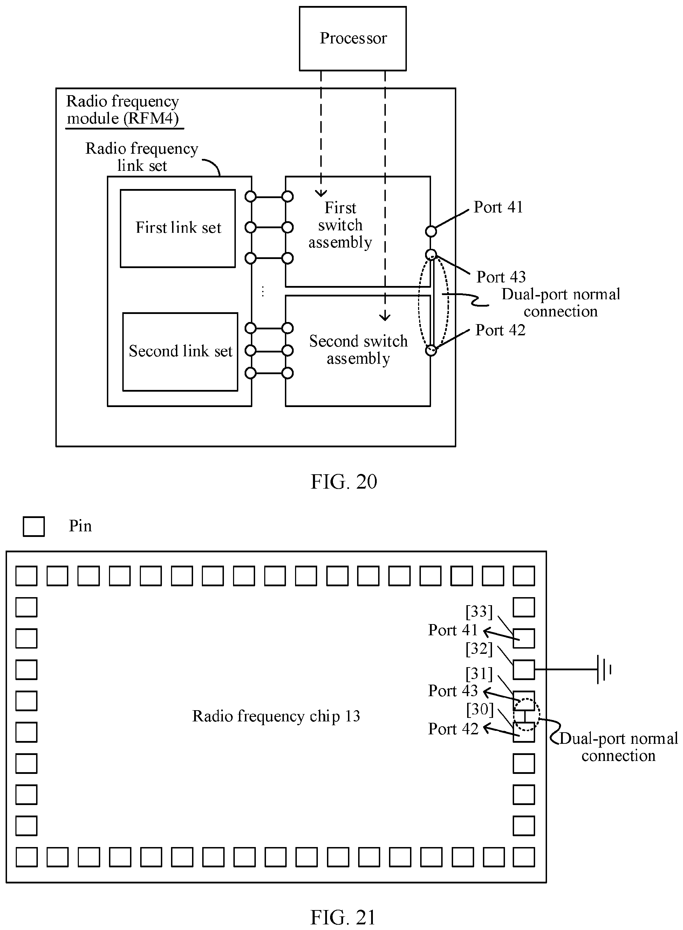

For example, FIG. 20 is a schematic logical composition diagram of another radio frequency module (such as RFM4). Refer to an example of FIG. 9. In the logical structure shown in FIG. 20, an example in which a compatible port (such as the port 43) is provided on a first switch component is continued to be used. In this example, the port 43 used as the compatible port may maintain dual-port normally connected to an output end of a second switch assembly (such as the port 42). For example, the port 43 and the port 42 may be electrically connected to each other through a communication line (or a transmission line) inside RFM4.

This corresponds to the example of a radio frequency chip 13 shown in FIG. 21. An example in which a function of the port 43 is implemented by using a pin [31] is used. Then, the pin [31] may maintain electrically connected to a pin [30] used as a port 42.

In some other embodiments, the port 43 may not occupy a pin on the radio frequency chip 13. Then, the pin [31] may be configured to transmit another signal or to be grounded.

In an implementation of the radio frequency module shown in FIG. 20 and FIG. 21, a signal may flow on different paths based on different operating states of the first switch assembly provided with a compatible port.

For example, an example in which the first switch assembly corresponds to a low frequency switch with a low frequency switching function, and the second switch assembly corresponds to a medium-high band switch with a low frequency switching function (shown in 52 of FIG. 10).

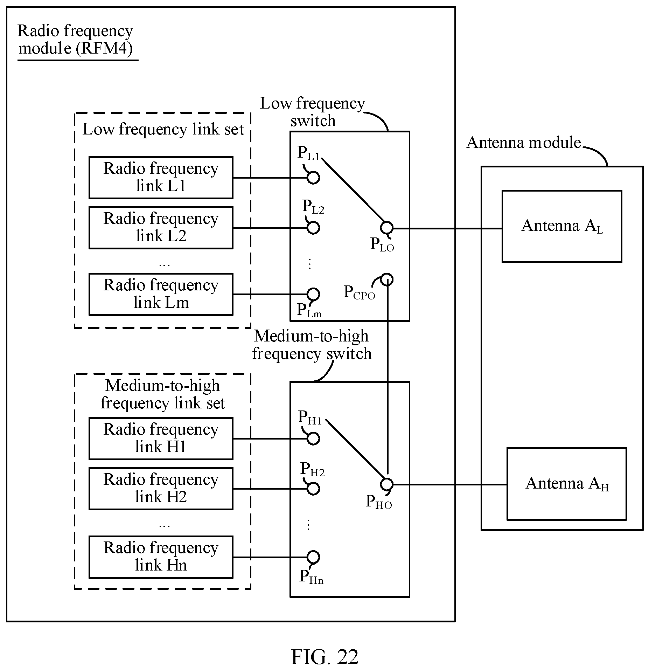

With reference to FIG. 22, an example in which RFM4 is applied to the dual-antenna solution is used.

When the electronic device operates in a low band, the processor may control the output end (such as P_{LO}) of the low frequency switch to electrically connect to any input end (such as any one of P_{L1} to P_{Lm}), so that an antenna A_{L} shown in FIG. 22 is electrically connected to a corresponding low frequency link, to implement flow of a low frequency signal between a low frequency antenna and a low frequency radio frequency link.

When the electronic device operates in a medium-high band, the processor may control the output end (such as P_{HO}) of the medium-high band switch to electrically connect to any input end (such as any one of P_{H1} to P_{Hn}), so that an antenna A_{H} shown in FIG. 22 is electrically connected to a corresponding medium-high band link, to implement flow of a medium-high band signal between a medium-high band antenna and a medium-high band radio frequency link.

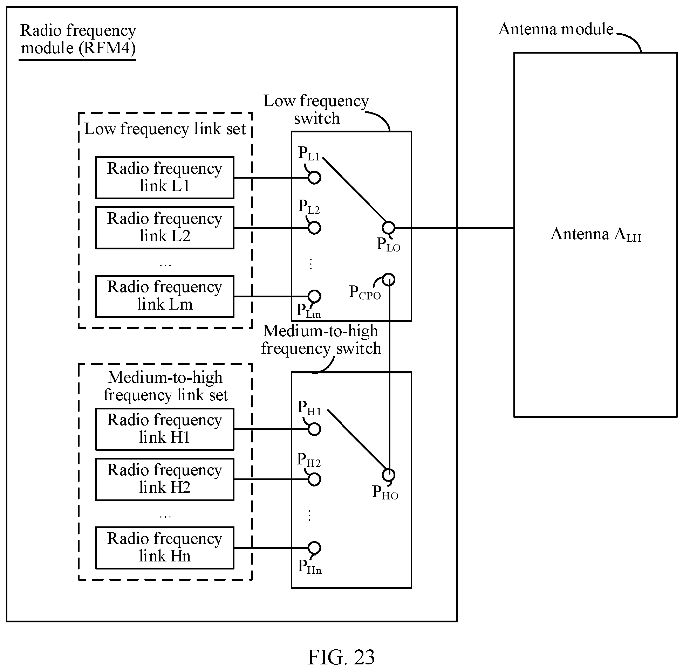

With reference to FIG. 23, an example in which RFM4 is applied to the single-antenna solution is used. The antenna (such as the antenna A_{LH}) may be electrically connected to an output end of a switch assembly provided with a compatible port. For example, as shown in FIG. 23, the antenna A_{LH} may be electrically connected to the output end (such as P_{LO}) of the low frequency switch.

When the electronic device operates in a low band, the processor may control the output end (such as P_{LO}) of the low frequency switch to electrically connect to any input end (such as any one of P_{L1} to P_{Lm}), so that an antenna A_{LH} shown in FIG. 23 is electrically connected to a corresponding low frequency link, to implement flow of a low frequency signal between the antenna A_{LH} and a low frequency radio frequency link.

When the electronic device operates in a medium-high band, the processor may control the output end (such as P_{LO}) of the low frequency switch to electrically connect to the compatible port (such as P_{CPO}). The processor may further control the output end (such as P_{HO}) of the medium-high band switch to electrically connect to any input end (such as any one of P_{H1} to P_{Hn}), so that the medium-high band signal may flow between the antenna A_{LH} and the medium-high band radio frequency link through P_{LO}, P_{CPO}, and P_{HO}.

Therefore, based on the implementation of the solutions shown in FIG. 20 to FIG. 23, different antenna solutions can be adapted by controlling, by using software, the operating state of the switch assembly provided with a compatible port.

It should be noted that in the examples of FIG. 9 to FIG. 23, an example in which the switch assemblies and the radio frequency link are integrated into the radio frequency module is used for description. In some other embodiments, the switch assembly and the radio frequency link may alternatively be separately arranged. In this case, the compatible port described in the foregoing embodiments may be provided in at least one of the switch assemblies. In this way, effects of using one radio frequency solution to be compatible with different antenna solutions can be further achieved.

In addition, in the foregoing description of embodiments of this application, the compatible port may be provided on the first switch assembly or the second switch assembly, so that the antenna in the single-antenna solution may be connected to the output end of the first switch assembly to implement full-band radio frequency domain processing. It may be understood that, in some other embodiments, there may be a plurality of compatible ports. For example, in the foregoing quantity, the plurality of compatible ports may include a first compatible port and a second compatible port. The first compatible port may be provided on the first switch assembly, and the second compatible port may be provided on the second switch assembly. For an operating mechanism of each compatible port, refer to descriptions of a compatible port design in the foregoing solution. Therefore, for the single-antenna solution, the antenna may be arranged at the output end of a first switch or the output end of a second switch. In the foregoing connection manner, full-band radio frequency domain processing is performed on the antenna by using a corresponding compatible port.

It should be understood that, in the foregoing description of the solution, the solution provided in this embodiment of this application is mainly described from a perspective of the radio frequency module. To implement the foregoing functions, corresponding hardware structures and/or software modules for performing the functions are included. A person skilled in the art should be easily aware that, in combination with the units and algorithm steps of the examples described in embodiments disclosed in this specification, this application can be implemented through hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, the related apparatuses or components may be divided into functional modules according to the foregoing method example. For example, each functional module may be divided based on each corresponding function, or two or more functions may be integrated into one processing module. The integrated module may be implemented in the form of hardware, or may be implemented in a form of a software functional module. It should be noted that in embodiments of this application, the module division is an example, and is merely logical function division, and there may be other division manners during actual implementation.

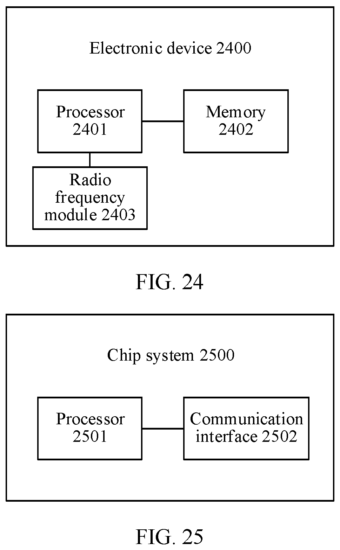

As an example, FIG. 24 is a schematic composition diagram of an electronic device according to an embodiment of this application. The electronic device 2400 may include a processor 2401 and a memory 2402. The radio frequency module 2403 provided in any one of FIG. 9 to FIG. 23 is also disposed in the electronic device. For example, the radio frequency module 2403 may be RFM3 or RFM4 in the foregoing example. The memory 2402 is configured to store computer-executable instructions. For example, in some embodiments, when the processor 2401 executes instructions stored in the memory 2402, the radio frequency module 2403 in the electronic device 2400 may be switched to a state corresponding to a current antenna solution (such as the single-antenna solution or the dual-antenna solution) to perform radio frequency domain signal processing.

It should be noted that all related content of the steps in the foregoing method embodiments may be cited in function description of corresponding functional modules. Details are not described herein again.

FIG. 25 is a schematic composition diagram of a chip system 2500. The chip system 2500 may include a processor 2501 and a communication interface 2502, configured to support a related device to achieve a function related to the foregoing embodiment. In a possible design, the chip system further includes a memory. The memory is configured to store a program instruction and data that are necessary for controlling a radio frequency module. The chip system may include a chip, or may include a chip and another discrete device. It should be noted that in some implementations of this application, the communication interface 2502 may also be referred to as an interface circuit.

It should be noted that all related content of the steps in the foregoing method embodiments may be cited in function description of corresponding functional modules. Details are not described herein again.

All or some of the functions or motions or operations or steps in the foregoing embodiments may be implemented by using software, hardware, firmware, or any combination thereof. When a software program is used to implement the embodiments, all or a part of embodiments may be implemented in a form of a computer program product. The computer program product includes one or more computer instructions. When the computer program instructions are loaded and executed on a computer, all or some of the processes or functions according to embodiments of this application are produced. The computer may be a general-purpose computer, a dedicated purpose computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another web site, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (solid state disk, SSD)), or the like.

## Claims

1. A radio frequency chip (12, 13), wherein the radio frequency chip (12, 13) comprises a first pin (33), a second pin (30), a third pin (31) and a radio frequency module (RFM3), wherein the first pin (33) is configured to electrically connect to a first antenna (A_{LH}) that covers a first band and a second band or to a second antenna (A_{L}) that covers the first band, the second pin (30) is configured to electrically connect to a third antenna (A_{H}) that covers the second band, the radio frequency module (RFM3) is used in an electronic device (100), the first antenna (A_{LH}) is disposed in the electronic device (100) in a single-antenna design and the second antenna (A_{L}) and the third antenna (A_{H}) are disposed in the electronic device (100) in a dual-antenna design;
the radio frequency module (RFM3) comprises a first radio frequency link set, a second radio frequency link set and at least a first switch assembly that corresponds to the first radio frequency link set and a second switch assembly that corresponds to the second radio frequency link set; each radio frequency link set comprises at least two radio frequency links for performing radio frequency processing of a signal;
each radio frequency link in the first radio frequency link set is electrically connected to an input end (P_{L1}.. P_{Lm}) of the first switch assembly;
each radio frequency link in the second radio frequency link set is electrically connected to an input end (P_{H1}.. P_{Hn}) of the second switch assembly;
the first radio frequency link set is configured to perform radio frequency domain processing on signals with different frequencies in the first band;
the second radio frequency link set is configured to perform radio frequency domain processing on signals with different frequencies in the second band;
a control end and an output end (P_{LO}) are provided on the first switch assembly, the control end of the first switch assembly is configured to electrically connect to a processor (110) of the electronic device (100) to receive a first control signal for controlling the first switch assembly, the output end (P_{LO}) of the first switch assembly is electrically connected to the first pin (33);
a control end and an output end (P_{HO}) are provided on the second switch assembly, the control end of the second switch assembly is configured to electrically connect to the processor (110) to receive a control signal for controlling the second switch assembly, the output end (P_{LO}) of the second switch assembly is electrically connected to the second pin (33); and
a compatible port (P_{CPO}) is also provided on the first switch assembly, the compatible port (P_{CPO}) is electrically connected to the third pin (31), wherein in the single-antenna design the third pin (31) is electrically connected to the second pin (30) to transmit a signal between the output end (P_{LO}) of the first switch assembly and the output end (P_{HO}) of the second switch assembly, and the first switch assembly is configured to electrically connect the output end (P_{LO}) of the first switch assembly to the compatible port (P_{CPO}) based on the control signal to implement cascading of the first switch assembly and the second switch assembly.

2. The radio frequency chip (12, 13) according to claim 1, wherein
the first band is a low band; and the first radio frequency link set comprises a low frequency radio frequency link.

3. The radio frequency chip (12, 13) according to claim 1 or 2, wherein
the second band is a medium-high band; and the second radio frequency link set comprises a medium-high band radio frequency link.

4. The radio frequency chip (12, 13) according to claim 1, wherein
the first switch assembly is configured to electrically connect the output end (P_{LO}) of the first switch assembly to the at least one input end (P_{L1}.. P_{Lm}) of the first switch assembly based on the control signal when the electronic device (100) operates in the first band in the single-antenna design; and
the first switch assembly is configured to electrically connect the output end (P_{LO}) of the first switch assembly to the compatible port (P_{CPO}), and the second switch assembly is configured to electrically connect the compatible port (P_{CPO}) to the output end (P_{HO}) of the second switch assembly, when the electronic device (100) operates in the second band in the single-antenna design.

5. The radio frequency chip (12, 13) according to claim 4, wherein
the third pin (31) is electrically connected to the second pin (30) through a transmission line on a PCB, wherein the radio frequency chip (12, 13) is carried on the PCB; or
the compatible port (P_{CPO}) is electrically connected to the output end (P_{HO}) of the second switch assembly through a transmission line inside the radio frequency module (RFM3).

6. The radio frequency chip (12, 13) according to claim 1, wherein
the first switch assembly is configured to electrically connect the output end (P_{LO}) of the first switch assembly to at least one input end (P_{L1}.. P_{Lm}) of the first switch assembly based on the control signal when the electronic device (100) operates in the first band in the dual-antenna design.

7. The radio frequency chip (12, 13) according to claim 1 or 6, wherein
the second switch assembly is configured to electrically connect the output end (P_{HO}) of the second switch assembly to at least one input end (P_{H1}.. P_{Hn}) of the second switch assembly when the electronic device (100) operates in the second band in the dual-antenna design.

8. The radio frequency chip according to any one of claims 1 to 7, wherein the third pin (31) is located between the first pin (33) and the second pin (30).

9. An electronic device (100), wherein the electronic device (100) comprises a first antenna (A_{LH}) that covers a first band and a second band or comprises a second antenna (A_{L}) that covers the first band and a third antenna (A_{H}) that covers the second band, wherein the electronic device (100) further comprises a processor (110) and the radio frequency chip (12, 13) according to any one of claims 1 to 8.

10. A radio frequency module control method, wherein the method is applied to the electronic device according to claim 9; and
the radio frequency module control method comprises:
when the electronic device (100) operates in the first band in the single-antenna design, controlling by the processor, the first switch assembly to electrically connect the output end (P_{LO}) of to the at least one input end (P_{L1}.. P_{Lm}) of the first switch assembly; and
when the electronic device (100) operates in the second band in the single-antenna design, controlling by the processor, the first switch assembly to electrically connect the output end (P_{LO}) of the first switch assembly to the compatible port (P_{CPO}), to enable the signal to flow between the output end (P_{LO}) of the first switch assembly and the output end (P_{HO}) of the second switch assembly through the compatible port (P_{CPO}).

## Patentansprüche

1. Hochfrequenzchip (12, 13), wobei der Hochfrequenzchip (12, 13) einen ersten Pin (33), einen zweiten Pin (30), einen dritten Pin (31) und ein Hochfrequenzmodul (RFM3) umfasst, wobei der erste Pin (33) dazu konfiguriert ist, elektrisch mit einer ersten Antenne (A_{LH}), die ein erstes Band und ein zweites Band abdeckt, oder mit einer zweiten Antenne (A_{L}), die das erste Band abdeckt, verbunden zu werden, der zweite Pin (30) dazu konfiguriert ist, elektrisch mit einer dritten Antenne (A_{H}), die das zweite Band abdeckt, verbunden zu werden, das Hochfrequenzmodul (RFM3) in einer elektronischen Vorrichtung (100) verwendet wird, die erste Antenne (A_{LH}) in der elektronischen Vorrichtung (100) in einem Einzelantennendesign angeordnet ist und die zweite Antenne (A_{L}) sowie die dritte Antenne (A_{H}) in der elektronischen Vorrichtung (100) in einem Dualantennendesign angeordnet sind;
das Hochfrequenzmodul (RFM3) umfasst einen ersten Hochfrequenz-Link-Satz, einen zweiten Hochfrequenz-Link-Satz sowie mindestens eine erste Schalteranordnung, die dem ersten Hochfrequenz-Link-Satz entspricht, und eine zweite Schalteranordnung, die dem zweiten Hochfrequenz-Link-Satz entspricht; jeder Hochfrequenz-Link-Satz umfasst mindestens zwei Hochfrequenz-Links zur Durchführung einer Hochfrequenzverarbeitung eines Signals;
jeder Hochfrequenz-Link im ersten Hochfrequenz-Link-Satz ist elektrisch mit einem Eingangsende (P_{L1}.. P_{Lm}) der ersten Schalteranordnung verbunden;
jeder Hochfrequenz-Link im zweiten Hochfrequenz-Link-Satz ist elektrisch mit einem Eingangsende (P_{H1}.. P_{Hn}) der zweiten Schalteranordnung verbunden;
der erste Hochfrequenz-Link-Satz ist dazu konfiguriert, eine Hochfrequenzbereichsverarbeitung an Signalen mit unterschiedlichen Frequenzen im ersten Band durchzuführen;
der zweite Hochfrequenz-Link-Satz ist dazu konfiguriert, eine Hochfrequenzbereichsverarbeitung an Signalen mit unterschiedlichen Frequenzen im zweiten Band durchzuführen;
ein Steuerungsende und ein Ausgangsende (P_{LO}) sind an der ersten Schalteranordnung vorgesehen, das Steuerungsende der ersten Schalteranordnung ist dazu konfiguriert, elektrisch mit einem Prozessor (110) der elektronischen Vorrichtung (100) verbunden zu werden, um ein erstes Steuersignal zur Steuerung der ersten Schalteranordnung zu empfangen, das Ausgangsende (P_{LO}) der ersten Schalteranordnung ist elektrisch mit dem ersten Pin (33) verbunden;
ein Steuerungsende und ein Ausgangsende (P_{HO}) sind an der zweiten Schalteranordnung vorgesehen, das Steuerungsende der zweiten Schalteranordnung ist dazu konfiguriert, elektrisch mit dem Prozessor (110) verbunden zu werden, um ein Steuersignal zur Steuerung der zweiten Schalteranordnung zu empfangen, das Ausgangsende (P_{LO}) der zweiten Schalteranordnung ist elektrisch mit dem zweiten Pin (33) verbunden; und
Ein kompatibler Port (P_{CPO}) ist ebenfalls an der ersten Schalteranordnung vorgesehen, wobei der kompatible Port (P_{CPO}) elektrisch mit dem dritten Pin (31) verbunden ist, wobei im Einzelantennendesign der dritte Pin (31) elektrisch mit dem zweiten Pin (30) verbunden ist, um ein Signal zwischen dem Ausgangsende (P_{LO}) der ersten Schalteranordnung und dem Ausgangsende (P_{HO}) der zweiten Schalteranordnung zu übertragen, und wobei die erste Schalteranordnung dazu konfiguriert ist, das Ausgangsende (P_{LO}) der ersten Schalteranordnung basierend auf dem Steuersignal elektrisch mit dem kompatiblen Port (P_{CPO}) zu verbinden, um eine Kaskadierung der ersten Schalteranordnung und der zweiten Schalteranordnung zu implementieren.

2. Hochfrequenzchip (12, 13) nach Anspruch 1, wobei
das erste Band ein niedriges Band ist; und der erste Niederfrequenz-Hochfrequenz-Link eine Niederfrequenz-Hochfrequenzverbindung umfasst.

3. Hochfrequenzchip (12, 13) nach Anspruch 1 oder 2, wobei
das zweite Band ein mittleres bis hohes Band ist; und der zweite Hochfrequenz-Link für das mittlere bis hohe Band umfasst.

4. Hochfrequenzchip (12, 13) nach Anspruch 1, wobei
die erste Schalteranordnung dazu konfiguriert ist, das Ausgangsende (P_{LO}) der ersten Schalteranordnung basierend auf dem Steuersignal elektrisch mit dem mindestens einen Eingangsende (P_{L1}.. P_{Lm}) der ersten Schalteranordnung zu verbinden, wenn die elektronische Vorrichtung (100) im Einzelantennendesign im ersten Band arbeitet; und
die erste Schalteranordnung dazu konfiguriert ist, das Ausgangsende (P_{LO}) der ersten Schalteranordnung elektrisch mit dem kompatiblen Port (P_{CPO}) zu verbinden, und die zweite Schalteranordnung dazu konfiguriert ist, den kompatiblen Port (P_{CPO}) elektrisch mit dem Ausgangsende (P_{HO}) der zweiten Schalteranordnung zu verbinden, wenn die elektronische Vorrichtung (100) im Einzelantennendesign im zweiten Band arbeitet.

5. Hochfrequenzchip (12, 13) nach Anspruch 4, wobei
der dritte Pin (31) über eine Übertragungsleitung auf einer Leiterplatte (PCB) elektrisch mit dem zweiten Pin (30) verbunden ist, wobei der Hochfrequenzchip (12, 13) auf der Leiterplatte getragen wird; oder
der kompatible Port (P_{CPO}) über eine Übertragungsleitung innerhalb des Hochfrequenzmoduls (RFM3) elektrisch mit dem Ausgangsende (P_{HO}) der zweiten Schalteranordnung verbunden ist.

6. Hochfrequenzchip (12, 13) nach Anspruch 1, wobei
Die erste Schalteranordnung dazu konfiguriert ist, dass sie das Ausgangsende (P_{LO}) der ersten Schalteranordnung basierend auf dem Steuersignal elektrisch mit mindestens einem Eingangsende (P_{L1}.. P_{Lm}) der ersten Schalteranordnung verbindet, wenn die elektronische Vorrichtung (100) im Dualantennendesign im ersten Frequenzband arbeitet.

7. Hochfrequenzchip (12, 13) nach Anspruch 1 oder 6, wobei
die zweite Schalteranordnung dazu konfiguriert ist, dass sie das Ausgangsende (P_{HO}) der zweiten Schalteranordnung elektrisch mit mindestens einem Eingangsende (P_{H1}.. P_{Hn}) der zweiten Schalteranordnung verbindet, wenn die elektronische Vorrichtung (100) im Dualantennendesign im zweiten Frequenzband arbeitet.

8. Hochfrequenzchip nach einem der Ansprüche 1 bis 7, wobei der dritte Pin (31) zwischen dem ersten Pin (33) und dem zweiten Pin (30) angeordnet ist.

9. Elektronische Vorrichtung (100), wobei die elektronische Vorrichtung (100) eine erste Antenne (A_{LH}) umfasst, die ein erstes Frequenzband und ein zweites Frequenzband abdeckt, oder eine zweite Antenne (A_{L}) umfasst, die das erste Frequenzband abdeckt, und eine dritte Antenne (A_{H}), die das zweite Frequenzband abdeckt, wobei die elektronische Vorrichtung (100) ferner einen Prozessor (110) und den Hochfrequenzchip (12, 13) nach einem der Ansprüche 1 bis 8 umfasst.

10. Steuerverfahren für ein Hochfrequenzmodul, wobei das Verfahren auf die elektronische Vorrichtung nach Anspruch 9 angewendet wird; und
das Steuerverfahren für ein Hochfrequenzmodul umfasst:
wenn die elektronische Vorrichtung (100) im Einzelantennendesign im ersten Frequenzband arbeitet, Steuern durch den Prozessor, dass die erste Schalteranordnung das Ausgangsende (P_{LO}) elektrisch mit dem mindestens einen Eingangsende (P_{L1}.. P_{Lm}) der ersten Schalteranordnung verbindet; und
wenn die elektronische Vorrichtung (100) im Einzelantennendesign im zweiten Frequenzband arbeitet, Steuern durch den Prozessor, dass die erste Schalteranordnung das Ausgangsende (P_{LO}) der ersten Schalteranordnung mit dem kompatiblen Anschluss (P_{CPO}) verbindet, um zu ermöglichen, dass das Signal zwischen dem Ausgangsende (P_{LO}) der ersten Schalteranordnung und dem Ausgangsende (P_{HO}) der zweiten Schalteranordnung durch den kompatiblen Anschluss (P_{CPO}) fließt.

## Revendications

1. Puce radiofréquence (12, 13), dans laquelle la puce radiofréquence (12, 13) comprend une première broche (33), une deuxième broche (30), une troisième broche (31) et un module radiofréquence (RFM3), dans laquelle la première broche (33) est configurée pour être électriquement connectée à une première antenne (A_{LH}) qui couvre une première bande et une seconde bande ou à une deuxième antenne (A_{L}) qui couvre la première bande, la deuxième broche (30) est configurée pour être électriquement connectée à une troisième antenne (A_{H}) qui couvre la seconde bande, le module radiofréquence (RFM3) est utilisé dans un dispositif électronique (100), la première antenne (A_{LH}) est disposée dans le dispositif électronique (100) dans une conception à antenne unique et la deuxième antenne (A_{L}) et la troisième antenne (A_{H}) sont disposées dans le dispositif électronique (100) dans une conception à double antenne ;
le module radiofréquence (RFM3) comprend un premier ensemble de liaisons radiofréquence, un second ensemble de liaisons radiofréquence et au moins un premier ensemble de commutation qui correspond au premier ensemble de liaisons radiofréquence et un second ensemble de commutation qui correspond au second ensemble de liaisons radiofréquence ; chaque ensemble de liaisons radiofréquence comprend au moins deux liaisons radiofréquence pour effectuer un traitement radiofréquence d'un signal ;
chaque liaison radiofréquence dans le premier ensemble de liaisons radiofréquence est électriquement connectée à une extrémité d'entrée (P_{L1}.. P_{Lm}) du premier ensemble de commutation ;
chaque liaison radiofréquence dans le second ensemble de liaisons radiofréquence est é lectriquement connectée à une extrémité d'entrée (P_{H1}.. P_{Hn}) du second ensemble de commutation ;
le premier ensemble de liaisons radiofréquence est configuré pour effectuer un traitement dans le domaine radiofréquence sur des signaux ayant des fréquences différentes dans la première bande ;
le second ensemble de liaisons radiofréquence est configuré pour effectuer un traitement dans le domaine radiofréquence sur des signaux ayant des fréquences différentes dans la seconde bande ;
une extrémité de commande et une extrémité de sortie (P_{LO}) sont prévues sur le premier ensemble de commutation, l'extrémité de commande du premier ensemble de commutation est configurée pour être électriquement connectée à un processeur (110) du dispositif électronique (100) pour recevoir un premier signal de commande pour commander le premier ensemble de commutation, l'extrémité de sortie (P_{LO}) du premier ensemble de commutation est électriquement connectée à la première broche (33) ;
une extrémité de commande et une extrémité de sortie (P_{HO}) sont prévues sur le second ensemble de commutation, l'extrémité de commande du second ensemble de commutation est configurée pour être électriquement connectée au processeur (110) pour recevoir un signal de commande pour commander le second ensemble de commutation, l'extrémité de sortie (P_{LO}) du second ensemble de commutation est électriquement connectée à la deuxième broche (33) ; et
un port compatible (P_{CPO}) est également prévu sur le premier ensemble de commutation, le port compatible (P_{CPO}) est connecté électriquement à la troisième broche (31), dans lequel, dans la conception à antenne unique, la troisième broche (31) est connectée électriquement à la deuxième broche (30) pour transmettre un signal entre l'extrémité de sortie (P_{LO}) du premier ensemble de commutation et l'extrémité de sortie (P_{HO}) du second ensemble de commutation, et le premier ensemble de commutation est configuré pour connecter électriquement l'extrémité de sortie (P_{LO}) du premier ensemble de commutation au port compatible (P_{CPO}) sur la base du signal de commande pour mettre en œuvre la mise en cascade du premier ensemble de commutation et du second ensemble de commutation.

2. Puce radiofréquence (12, 13) selon la revendication 1, dans laquelle
la première bande est une bande basse ; et le premier ensemble de liaisons radiofréquence comprend une liaison radiofréquence basse fréquence.

3. Puce radiofréquence (12, 13) selon la revendication 1 ou 2, dans laquelle
la seconde bande est une bande moyenne-haute ; et le second ensemble de liaisons radiofréquence comprend une liaison radiofréquence à bande moyenne-haute.

4. Puce radiofréquence (12, 13) selon la revendication 1, dans laquelle
le premier ensemble de commutation est configuré pour connecter électriquement l'extrémité de sortie (P_{LO}) du premier ensemble de commutation à l'au moins une extrémité d'entrée (P_{L1}.. P_{Lm}) du premier ensemble de commutation sur la base du signal de commande lorsque le dispositif électronique (100) fonctionne dans la première bande dans la conception à antenne unique ; et
le premier ensemble de commutation est configuré pour connecter électriquement l'extrémité de sortie (P_{LO}) du premier ensemble de commutation au port compatible (P_{CPO}), et le second ensemble de commutation est configuré pour connecter électriquement le port compatible (P_{CPO}) à l'extrémité de sortie (P_{HO}) du second ensemble de commutation, lorsque le dispositif électronique (100) fonctionne dans la seconde bande dans la conception à antenne unique.

5. Puce radiofréquence (12, 13) selon la revendication 4, dans laquelle
la troisième broche (31) est connectée électriquement à la deuxième broche (30) par l'intermédiaire d'une ligne de transmission sur un PCB, dans laquelle la puce radiofréquence (12, 13) est portée sur le PCB ; ou
le port compatible (P_{CPO}) est connecté électriquement à l'extrémité de sortie (P_{HO}) du second ensemble de commutation par l'intermédiaire d'une ligne de transmission à l'intérieur du module radiofréquence (RFM3).

6. Puce radiofréquence (12, 13) selon la revendication 1, dans laquelle
Le premier ensemble de commutateurs est configuré pour connecter électriquement l'extrémité de sortie (P_{LO}) du premier ensemble de commutateurs à au moins une extrémité d'entrée (P_{L1}.. P_{Lm}) du premier ensemble de commutateurs sur la base du signal de commande lorsque le dispositif électronique (100) fonctionne dans la première bande dans la conception à double antenne.

7. La puce radiofréquence (12, 13) selon la revendication 1 ou 6, dans laquelle
le second ensemble de commutateurs est configuré pour connecter électriquement l'extrémité de sortie (P_{HO}) du second ensemble de commutateurs à au moins une extrémité d'entrée (P_{H1}.. P_{Hn}) du second ensemble de commutateurs lorsque le dispositif électronique (100) fonctionne dans la seconde bande dans la conception à double antenne.

8. La puce radiofréquence selon l'une quelconque des revendications 1 à 7, dans laquelle la troisième broche (31) est située entre la première broche (33) et la seconde broche (30).

9. Dispositif électronique (100), dans lequel le dispositif électronique (100) comprend une première antenne (A_{LH}) qui couvre une première bande et une seconde bande ou comprend une seconde antenne (A_{L}) qui couvre la première bande et une troisième antenne (A_{H}) qui couvre la seconde bande, dans lequel le dispositif électronique (100) comprend en outre un processeur (110) et la puce radiofréquence (12, 13) selon l'une quelconque des revendications 1 à 8.

10. Procédé de commande de module radiofréquence, dans lequel le procédé est appliqué au dispositif électronique selon la revendication 9 ; et
le procédé de commande de module radiofréquence comprend :
lorsque le dispositif électronique (100) fonctionne dans la première bande dans la conception à antenne unique, le processeur commandant le premier ensemble de commutateurs pour connecter électriquement l'extrémité de sortie (P_{LO}) à l'au moins une extrémité d'entrée (P_{L1}.. P_{Lm}) du premier ensemble de commutateurs ; et
lorsque le dispositif électronique (100) fonctionne dans la seconde bande dans la conception à antenne unique, le processeur commandant le premier ensemble de commutateurs pour connecter électriquement l'extrémité de sortie (P_{LO}) du premier ensemble de commutateurs au port compatible (P_{CPO}), pour permettre au signal de circuler entre l'extrémité de sortie (P_{LO}) du premier ensemble de commutateurs et l'extrémité de sortie (P_{HO}) du second ensemble de commutateurs à travers le port compatible (P_{CPO}).
